# EUROPEAN PATENT SPECIFICATION

(11) **EP 1 713 862 B1**
(45) Date of publication and mention of the grant of the patent: **23.01.2008**
(21) Application number: 05705579.0
(22) Date of filing: 13.01.2005
(51) Int. Cl.: C08L 69/00

(54) **IMPACT-MODIFIED COMPOSITIONS AND METHOD**
SCHLAGZÄH MODIFIZIERTE ZUSAMMENSETZUNGEN UND VERFAHREN
COMPOSITIONS ANTICHOC ET PROCEDE

(30) Priority: 04.02.2004 US 771520
(43) Date of publication of application: 25.10.2006
(73) Proprietor: General Electric Company, Schenectady, NY 12345 (US)
(72) Inventor: KOEVOETS, Christiaan, H.J., NL-4708 HS Roosendaal (NL); TIMMERMANS, Henricus, Cornelis, M., NL-4761 BV Zevenbergen (NL); PIERRE, Jean, R., B-5081 St.Denis (BE)
(74) Representative: Strehlke, Ingo Kurt
(86) International application number: PCT/US2005/000983
(87) International publication number: WO 2005/080503

(56) References cited:
- WO-A-02/36688
- US-A- 4 888 387
- US-A- 5 658 984

## Description

### BACKGROUND OF THE INVENTION

The present invention relates to compositions comprising a polycarbonate and a rubber modified thermoplastic resin. Compositions comprising a polycarbonate and a rubber modified thermoplastic resin are known in the art. These compositions often have a problem with color formation during processing or during use in applications at high temperature. A problem to be solved is to devise compositions comprising a polycarbonate and a rubber modified thermoplastic resin which exhibit color stability under conditions of high temperature.

### BRIEF DESCRIPTION OF THE INVENTION

The present inventors have discovered compositions comprising a polycarbonate and a rubber modified thermoplastic resin which show a surprising decrease in color formation under high temperature conditions, such as during molding or other thermal processing. The compositions also possess an attractive balance of other physical properties.

In a particular embodiment the present invention relates to a composition as defined in claim 1.

In other embodiments the present invention relates to articles made from the composition and a method to prepare the composition. Various other features, aspects, and advantages of the present invention will become more apparent with reference to the following description and appended claims.

### DETAILED DESCRIPTION OF THE INVENTION

In the following specification and the claims which follow, reference will be made to a number of terms which shall be defined to have the following meanings. The singular forms "a", "an" and "the" include plural referents unless the context clearly dictates otherwise. "Optional" or "optionally" means that the subsequently described event or circumstance may or may not occur, and that the description includes instances where the event occurs and instances where it does not. As used herein the term "polycarbonate" refers to polycarbonates comprising structural units derived from a carbonate precursor and at least one dihydroxy-substituted aromatic hydrocarbon, and includes copolycarbonates.

Polycarbonates useful in compositions of the present invention comprise structural units derived from at least one dihydroxy aromatic hydrocarbon. In various embodiments structural units derived from at least one dihydroxy aromatic hydrocarbon comprise at least about 60 percent of the total number of structural units derived from any dihydroxy-substituted hydrocarbon in the polycarbonates, and the balance of structural units derived from any dihydroxy-substituted hydrocarbon are aliphatic, alicyclic, or aromatic radicals.

In embodiments of the invention dihydroxy-substituted aromatic hydrocarbons from which structural units of polycarbonates may be derived comprise those represented by the formula (I):

(I) HO---D--OH

wherein D is a divalent aromatic radical. In some embodiments, D has the structure of formula (II): 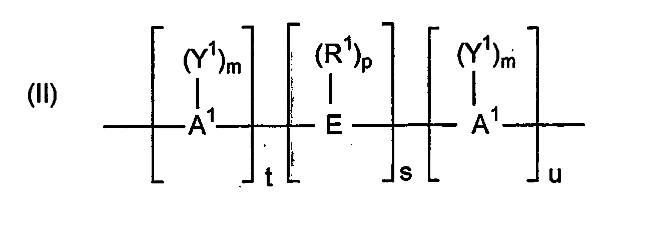 wherein A¹ represents an aromatic group including, but not limited to, phenylene, biphenylene, naphthylene and the like. In some embodiments E may be an alkylene or alkylidene group including, but not limited to, methylene, ethylene, ethylidene, propylene, propylidene, isopropylidene, butylene, butylidene, isobutylidene, amylene, amylidene, isoamylidene and the like. In other embodiments when E is an alkylene or alkylidene group, it may also consist of two or more alkylene or alkylidene groups connected by a moiety different from alkylene or alkylidene, including, but not limited to, an aromatic linkage; a tertiary nitrogen linkage; an ether linkage; a carbonyl linkage; a silicon-containing linkage, silane, siloxy; or a sulfur-containing linkage including, but not limited to, sulfide, sulfoxide, sulfone, and the like; or a phosphorus-containing linkage including, but not limited to, phosphinyl, phosphonyl, and the like. In other embodiments E may be a cycloaliphatic group including, but not limited to, cyclopentylidene, cyclohexylidene, 3,3,5-trimethylcyclohexylidene, methylcyclohexylidene, 2-[2.2.1]-bicycloheptylidene, neopentylidene, cyclopentadecylidene, cyclododecylidene, adamantylidene, and the like; a sulfur-containing linkage, including, but not limited to, sulfide, sulfoxide or sulfone; a phosphorus-containing linkage, including, but not limited to, phosphinyl or phosphonyl; an ether linkage; a carbonyl group; a tertiary nitrogen group; or a silicon-containing linkage including, but not limited to, silane or siloxy. R¹ independently at each occurrence comprises a monovalent hydrocarbon group including, but not limited to, alkenyl, allyl, alkyl, aryl, aralkyl, alkaryl, or cycloalkyl. In various embodiments a monovalent hydrocarbon group of R¹ may be halogen-substituted, particularly fluoro- or chloro-substituted, for example as in dichloroalkylidene, particularly gem-dichloroalkylidene. Y¹ independently at each occurrence may be an inorganic atom including, but not limited to, halogen (fluorine, bromine, chlorine, iodine); an inorganic group containing more than one inorganic atom including, but not limited to, nitro; an organic group including, but not limited to, a monovalent hydrocarbon group including, but not limited to, alkenyl, allyl, alkyl, aryl, aralkyl, alkaryl, or cycloalkyl, or an oxy group including, but not limited to, OR² wherein R² is a monovalent hydrocarbon group including, but not limited to, alkyl, aryl, aralkyl, alkaryl, or cycloalkyl; it being only necessary that Y¹ be inert to and unaffected by the reactants and reaction conditions used to prepare the polymer. In some particular embodiments Y¹ comprises a halo group or C₁-C₆ alkyl group. The letter "m" represents any integer from and including zero through the number of replaceable hydrogens on A¹ available for substitution; "p" represents an integer from and including zero through the number of replaceable hydrogens on E available for substitution; "t" represents an integer equal to at least one; "s" represents an integer equal to either zero or one; and "u" represents any integer including zero.

In dihydroxy-substituted aromatic hydrocarbons in which D is represented by formula (II) above, when more than one Y¹ substituent is present, they may be the same or different. The same holds true for the R¹ substituent. Where "s" is zero in formula (II) and "u" is not zero, the aromatic rings are directly joined by a covalent bond with no intervening alkylidene or other bridge. The positions of the hydroxyl groups and Y¹ on the aromatic nuclear residues A¹ can be varied in the ortho, meta, or para positions and the groupings can be in vicinal, asymmetrical or symmetrical relationship, where two or more ring carbon atoms of the hydrocarbon residue are substituted with Y¹ and hydroxyl groups. In some particular embodiments the parameters "t", "s", and "u" each have the value of one; both A¹ radicals are unsubstituted phenylene radicals; and E is an alkylidene group such as isopropylidene. In some particular embodiments both A¹ radicals are p-phenylene, although both may be o- or m-phenylene or one o- or m-phenylene and the other p-phenylene.

In some embodiments of dihydroxy-substituted aromatic hydrocarbons E may be an unsaturated alkylidene group. Suitable dihydroxy-substituted aromatic hydrocarbons of this type include those of the formula (III): 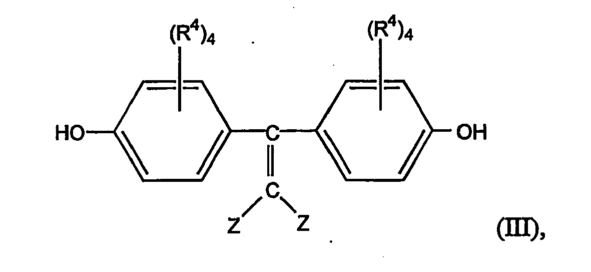 where independently each R⁴ is hydrogen, chlorine, bromine or a C₁₋₃₀ monovalent hydrocarbon or hydrocarbonoxy group, each Z is hydrogen, chlorine or bromine, subject to the provision that at least one Z is chlorine or bromine.

Suitable dihydroxy-substituted aromatic hydrocarbons also include those of the formula (IV): 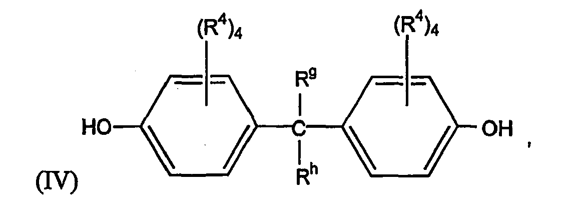 where independently each R⁴ is as defined hereinbefore, and independently R^{g} and R^{h} are hydrogen or a C₁₋₃₀ hydrocarbon group.

In some embodiments of the present invention, dihydroxy-substituted aromatic hydrocarbons that may be used comprise those disclosed by name or formula (generic or specific) in U.S. Patent Nos. 2,991,273, 2,999,835, 3,028,365, 3,148,172, 3,153,008, 3,271,367, 3,271,368, and 4,217,438. In other embodiments of the invention, dihydroxy-substituted aromatic hydrocarbons comprise bis(4-hydroxyphenyl)sulfide, bis(4-hydroxyphenyl) ether, bis(4-hydroxyphenyl)sulfone, bis(4-hydroxyphenyl)sulfoxide, 1,4-dihydroxybenzene, 4,4'-oxydiphenol, 2,2-bis(4-hydroxyphenyl)hexafluoropropane, 4,4'-(3,3,5-trimethylcyclohexylidene)diphenol; 4,4'-bis(3,5-dimethyl)diphenol, 1,1-bis(4-hydroxy-3-methylphenyl)cyclohexane; 4,4-bis(4-hydroxyphenyl)heptane; 2,4'-dihydroxydiphenylmethane; bis(2-hydroxyphenyl)methane; bis(4-hydroxyphenyl)methane; bis(4-hydroxy-5-nitrophenyl)methane; bis(4-hydroxy-2,6-dimethyl-3-methoxyphenyl)methane; 1,1-bis(4-hydroxyphenyl)ethane; 1,2-bis(4-hydroxyphenyl)ethane; 1,1-bis(4-hydroxy-2-chlorophenyl)ethane; 2,2-bis(3-phenyl-4-hydroxyphenyl)propane; 2,2-bis(4-hydroxy-3-methylphenyl)propane; 2,2-bis(4-hydroxy-3-ethylphenyl)propane; 2,2-bis(4-hydroxy-3-isopropylphenyl)propane; 2,2-bis(4-hydroxy-3,5-dimethylphenyl)propane; 3,5,3',5'-tetrachloro-4,4'-dihydroxyphenyl)propane; bis(4-hydroxyphenyl)cyclohexylmethane; 2,2-bis(4-hydroxyphenyl)-1-phenylpropane; 2,4'-dihydroxyphenyl sulfone; dihydroxy naphthalene; 2,6-dihydroxy naphthalene; hydroquinone; resorcinol; C₁₋₃ alkyl-substituted resorcinols; methyl resorcinol, catechol, 1,4-dihydroxy-3-methylbenzene; 2,2-bis(4-hydroxyphenyl)butane; 2,2-bis(4-hydroxyphenyl)-2-methylbutane; 1,1-bis(4-hydroxyphenyl)cyclohexane; 4,4'-dihydroxydiphenyl; 2-(3-methyl-4-hydroxyphenyl-2-(4-hydroxyphenyl)propane; 2-(3,5-dimethyl-4-hydroxyphenyl)-2-(4-hydroxyphenyl)propane; 2-(3-methyl-4-hydroxyphenyl)-2-(3,5-dimethyl-4-hydroxyphenyl)propane; bis(3,5-dimethylphenyl-4-hydroxyphenyl)methane; 1,1-bis(3,5-dimethylphenyl-4-hydroxyphenyl)ethane; 2,2-bis(3,5-dimethylphenyl-4-hydroxyphenyl)propane; 2,4-bis(3,5-dimethylphenyl-4-hydroxyphenyl)-2-methylbutane; 3,3-bis(3,5-dimethylphenyl-4-hydroxyphenyl)pentane; 1,1-bis(3,5-dimethylphenyl-4-hydroxyphenyl)cyclopentane; 1,1-bis(3,5-dimethylphenyl-4-hydroxyphenyl)cyclohexane; bis(3,5-dimethyl-4-hydroxyphenyl) sulfoxide, bis(3,5-dimethyl-4-hydroxyphenyl) sulfone and bis(3,5-dimethylphenyl-4-hydroxyphenyl)sulfide; and the like. In a particular embodiment the dihydroxy-substituted aromatic hydrocarbon comprises bisphenol A.

In some embodiments of dihydroxy-substituted aromatic hydrocarbons when E is an alkylene or alkylidene group, said group may be part of one or more fused rings attached to one or more aromatic groups bearing one hydroxy substituent. Suitable dihydroxy-substituted aromatic hydrocarbons of this type include those containing indane structural units such as represented by the formula (V), which compound is 3-(4-hydroxyphenyl)-1,1,3-trimethylindan-5-ol, and by the formula (VI), which compound is 1-(4-hydroxyphenyl)-1,3,3-trimethylindan-5-ol:

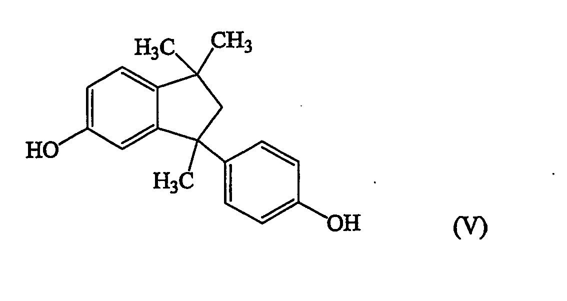

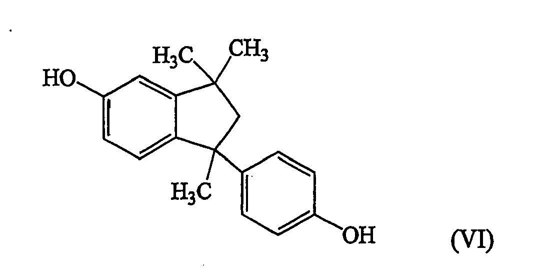

Also included among suitable dihydroxy-substituted aromatic hydrocarbons of the type comprising one or more alkylene or alkylidene groups as part of fused rings are the 2,2,2',2'-tetrahydro-1,1'-spirobi[1H-indene]diols having formula (VII): 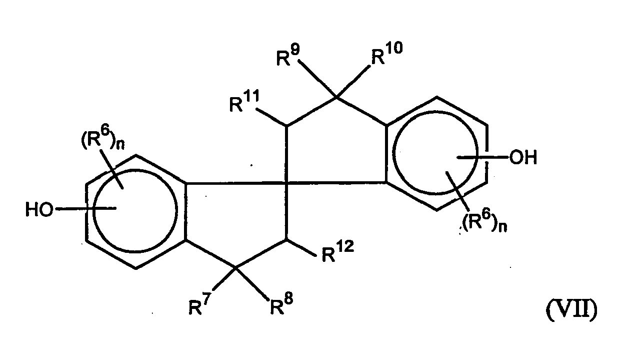 wherein each R⁶ is independently selected from monovalent hydrocarbon radicals and halogen radicals; each R⁷, R⁸, R⁹, and R¹⁰ is independently C₁₋₆ alkyl; each R¹¹ and R¹² is independently H or C₁₋₆ alkyl; and each n is independently selected from positive integers having a value of from 0 to 3 inclusive. In a particular embodiment the 2,2,2',2'-tetrahydro-1,1'-spirobi[1H-indene]diol is 2,2,2',2'-tetrahydro-3,3,3',3'-tetramethyl-1,1'-spirobi[1H-indene]-6,6'-diol (sometimes known as "SBI"). Mixtures comprising at least one of any of the foregoing dihydroxy-substituted aromatic hydrocarbons may also be employed.

Polycarbonates of the invention further comprise structural units derived from at least one carbonate precursor. There is no particular limitation on the carbonate precursor. Phosgene or diphenyl carbonate are frequently used. There is no particular limitation on the method for making suitable polycarbonates. Any known process may be used.

In some embodiments an interfacial process or a melt transesterification process may be used.

In one embodiment of the invention the polycarbonate comprises at least one homopolycarbonate, wherein the term "homopolycarbonate" refers to a polycarbonate synthesized using only one type of dihydroxy-substituted aromatic hydrocarbon. In particular embodiments the polycarbonate comprises a bisphenol A homo- or copolycarbonate, wherein the term "copolycarbonate" refers to a polycarbonate synthesized using more than one type of dihydroxy-substituted hydrocarbon, and in particular more than one type of dihydroxy-substituted aromatic hydrocarbon. In another particular embodiment the polycarbonate comprises a linear homopolycarbonate resin derived from bisphenol A. In other embodiments the polycarbonate comprises a blend of at least one first polycarbonate with at least one other polymeric resin, examples of which include, but are not limited to, a second polycarbonate differing from said first polycarbonate either in structural units or in molecular weight or in both these parameters, or a polyester, or an addition polymer such as acrylonitrile-styrene-acrylate copolymer.

In various embodiments the weight average molecular weight of the polycarbonate ranges from about 5,000 to about 200,000. In other particular embodiments the weight average molecular weight of the polycarbonate resin is in one embodiment from about 10,000 to about 200,000 grams per mole ("g/mol"), in another embodiment from about 17,000 to about 100,000 g/mol, in another embodiment from about 18,000 to about 80,000 g/mol, in another embodiment from about 18,000 to about 40,000 g/mol, in still another embodiment from about 18,000 to about 36,000 g/mol, in still another embodiment from about 18,000 to about 30,000 g/mol, and in still another embodiment from about 18,000 to about 23,000 g/mol, all as determined by gel permeation chromatography relative to polystyrene standards. In other embodiments the weight average molecular weight of the polycarbonate ranges from about 28,000 to about 36,000 g/mol. Suitable polycarbonate resins exhibit an intrinsic viscosity in one embodiment of about 0.1 to about 1.5 deciliters per gram, in another embodiment of about 0.35 to about 0.9 deciliters per gram, in another embodiment of about 0.4 to about 0.6 deciliters per gram, and in still another embodiment of about 0.48 to about 0.54 deciliters per gram, all measured in methylene chloride at 25°C.

In a polycarbonate-containing blend there may an improvement in melt flow and/or other physical properties when one molecular weight grade of a polycarbonate is combined with a proportion of a relatively lower molecular weight grade of similar polycarbonate. Therefore, the present invention encompasses compositions comprising only one molecular weight grade of a polycarbonate and also compositions comprising two or more molecular weight grades of polycarbonate. When two or more molecular weight grades of polycarbonate are present, then the weight average molecular weight of the lowest molecular weight polycarbonate is in one embodiment about 10% to about 95%, in another embodiment about 40% to about 85%, and in still another embodiment about 60% to about 80% of the weight average molecular weight of the highest molecular weight polycarbonate. In one representative, non-limiting embodiment polycarbonate-containing blends include those comprising a polycarbonate with weight average molecular weight between about 18,000 and about 23,000 combined with a polycarbonate with weight average molecular weight between about 28,000 and about 36,000 (in all cases relative to polystyrene standards). When two or more molecular weight grades of polycarbonate are present, the weight ratios of the various molecular weight grades may range from about 1 to about 99 parts of one molecular weight grade and from about 99 to about 1 parts of any other molecular weight grades. In some embodiments a mixture of two molecular weight grades polycarbonate is employed, in which case the weight ratios of the two grades may range in one embodiment from about 99:1 to about 1:99, in another embodiment from about 80:20 to about 20:80, and in still another embodiment from about 70:30 to about 50:50. Since not all manufacturing processes for making a polycarbonate are capable of making all molecular weight grades of that constituent, the present invention encompasses compositions comprising two or more molecular weight grades of polycarbonate in which each polycarbonate is made by a different manufacturing process. In one particular embodiment the instant invention encompasses compositions comprising a polycarbonate made by an interfacial process in combination with a polycarbonate of different weight average molecular weight made by a melt process.

The amount of polycarbonate present in the compositions of the present invention is in one embodiment in a range of between about 5 wt.% and about 95 wt.%, in another embodiment in a range of between about 20 wt.% and about 85 wt.%, and in still another embodiment in a range of between about 25 wt.% and about 80 wt.%, based on the weight of the entire composition.

In various embodiments the compositions of the present invention comprise a rubber modified thermoplastic resin comprising a discontinuous elastomeric phase and a rigid thermoplastic phase wherein at least a portion of the rigid thermoplastic phase is grafted to the elastomeric phase. The compositions are derived from grafting at least one rubber substrate. The rubber substrate comprises the discontinuous elastomeric phase of the composition. The rubber substrate it is susceptible to grafting by at least a portion of a graftable monomer. The rubber substrate typically has a glass transition temperature, Tg, in one embodiment below about 0°C, in another embodiment below about minus 20°C, and in still another embodiment below about minus 30°C.

The rubber substrate is derived from polymerization by known methods of at least one monoethylenically unsaturated alkyl (meth)acrylate monomer selected from (C₁-C₁₂)alkyl(meth)acrylate monomers and mixtures comprising at least one of said monomers. As used herein, the terminology "monoethylenically unsaturated" means having a single site of ethylenic unsaturation per molecule, and the terminology "(meth)acrylate monomers" refers collectively to acrylate monomers and methacrylate monomers. As used herein, the terminology "(Cₓ-C_{y})", as applied to a particular unit, such as, for example, a chemical compound or a chemical substituent group, means having a carbon atom content of from "x" carbon atoms to "y" carbon atoms per such unit. For example, "(C₁-C₁₂)alkyl" means a straight chain, branched or cyclic alkyl substituent group having from 1 to 12 carbon atoms per group and includes, but is not limited to, methyl, ethyl, n-propyl, iso-propyl, n-butyl, sec-butyl, t-butyl, pentyl, hexyl, heptyl, octyl, nonyl, decyl, undecyl and dodecyl. Suitable (C₁-C₁₂)alkyl(meth)acrylate monomers include, but are not limited to, (C₁-C₁₂)alkyl acrylate monomers, illustrative examples of which include ethyl acrylate, butyl acrylate, iso-pentyl acrylate, n-hexyl acrylate, and 2-ethyl hexyl acrylate; and their (C₁-C₁₂)akyl methacrylate analogs illustrative examples of which include methyl methacrylate, ethyl methacrylate, propyl methacrylate, iso-propyl methacrylate, butyl methacrylate, hexyl methacrylate, and decyl methacrylate. In a particular embodiment of the present invention the rubber substrate comprises structural units derived from n-butyl acrylate.

In various embodiments the rubber substrate may also comprise structural units derived from at least one polyethylenically unsaturated monomer. As used herein, the terminology "polyethylenically unsaturated" means having two or more sites of ethylenic unsaturation per molecule. A polyethylenically unsaturated monomer is often employed to provide cross-linking of the rubber particles and to provide "graftlinking" sites in the rubber substrate for subsequent reaction with grafting monomers. Suitable polyethylenic unsaturated monomers include, but are not limited to, butylene diacrylate, divinyl benzene, butene diol dimethacrylate, trimethylolpropane tri(meth)acrylate, allyl methacrylate, diallyl methacrylate, diallyl maleate, diallyl fumarate, diallyl phthalate, triallyl methacrylate, triallylcyanurate, triallylisocyanurate, the acrylate of tricyclodecenylalcohol and mixtures comprising at least one of such monomers. In a particular embodiment the rubber substrate comprises structural units derived from triallylcyanurate.

In some embodiments the rubber substrate may optionally comprise structural units derived from minor amounts of other unsaturated monomers, for example those which are copolymerizable with an alkyl (meth)acrylate monomer used to prepare the rubber substrate. Suitable copolymerizable monomers include, but are not limited to, C₁-C₁₂ aryl or haloaryl substituted acrylate, C₁-C₁₂ aryl or haloaryl substituted methacrylate, or mixtures thereof; monoethylenically unsaturated carboxylic acids, such as, for example, acrylic acid, methacrylic acid and itaconic acid; glycidyl (meth)acrylate, hydroxy alkyl (meth)acrylate, hydroxy(C₁-C₁₂)alkyl (meth)acrylate, such as, for example, hydroxyethyl methacrylate; (C₄-C₁₂)cycloalkyl (meth)acrylate monomers, such as, for example, cyclohexyl methacrylate; (meth)acrylamide monomers, such as, for example, acrylamide, methacrylamide and N-substituted-acrylamide or - methacrylamides; maleimide monomers, such as, for example, maleimide, N-alkyl maleimides, N-aryl maleimides and haloaryl substituted maleimides; maleic anhydride; vinyl methyl ether, vinyl esters, such as, for example, vinyl acetate and vinyl propionate. As used herein, the term "(meth)acrylamide" refers collectively to acrylamides and methacrylamides. Suitable copolymerizable monomers also include, but are not limited to, vinyl aromatic monomers, such as, for example, styrene and substituted styrenes having one or more alkyl, alkoxy, hydroxy or halo substituent groups attached to the aromatic ring, including, but not limited to, alpha-methyl styrene, p-methyl styrene, 3,5-diethylstyrene, 4-n-propylstyrene, vinyl toluene, alpha-methyl vinyltoluene, vinyl xylene, trimethyl styrene, butyl styrene, t-butyl styrene, chlorostyrene, alpha-chlorostyrene, dichlorostyrene, tetrachlorostyrene, bromostyrene, alpha-bromostyrene, dibromostyrene, p-hydroxystyrene, p-acetoxystyrene, methoxystyrene and vinyl-substituted condensed aromatic ring structures, such as, for example, vinyl naphthalene, vinyl anthracene, as well as mixtures of vinyl aromatic monomers and monoethylenically unsaturated nitrile monomers such as, for example, acrylonitrile, ethacrylonitrile, methacrylonitrile, alpha-bromoacrylonitrile and alpha-chloro acrylonitrile. Substituted styrenes with mixtures of substituents on the aromatic ring are also suitable

The rubber substrate may be present in the rubber modified thermoplastic resin portion of the compositions of the invention in one embodiment at a level of from about 10 to about 94 percent by weight; in another embodiment at a level of from about 10 to about 80 percent by weight; in another embodiment at a level of from about 15 to about 80 percent by weight; in another embodiment at a level of from about 35 to about 80 percent by weight; in another embodiment at a level of from about 40 to about 80 percent by weight; in another embodiment at a level of from about 25 to about 60 percent by weight, and in still another embodiment at a level of from about 40 to about 50 percent by weight based on the weight of the rubber modified thermoplastic resin. In other embodiments the rubber substrate may be present in the rubber modified thermoplastic resin portion of the compositions of the invention at a level of from about 5 to about 50 percent by weight; at a level of from about 8 to about 40 percent by weight; or at a level of from about 10 to about 30 percent by weight based on the weight of the rubber modified thermoplastic resin.

There is no particular limitation on the particle size distribution of the rubber substrate (sometimes referred to hereinafter as initial rubber substrate to distinguish it from the rubber substrate following grafting). In some embodiments the rubber substrate may possess a broad particle size distribution with particles ranging in size from about 50 nanometers (nm) to about 1000nm. In other embodiments the number average particle size of the rubber substrate may be less than about 100nm. In still other embodiments the number average particle size of the rubber substrate may be in a range of between about 80nm and about 500nm. In still other embodiments the number average particle size of the rubber substrate may be in a range of between about 200nm and about 750nm. In other embodiments the number average particle size of the rubber substrate may be greater than about 400nm.

To prepare the rubber modified thermoplastic resin used in the invention, monomers are polymerized in the presence of the rubber substrate to thereby form a graft copolymer, at least a portion of which is chemically grafted to the rubber phase. Any portion of graft copolymer not chemically grafted to rubber substrate comprises the rigid thermoplastic phase. The rigid thermoplastic phase comprises a thermoplastic polymer or copolymer that exhibits a glass transition temperature (Tg) in one embodiment of greater than about 25°C, in another embodiment of greater than or equal to 90°C, and in still another embodiment of greater than or equal to 100°C.

In a particular embodiment the rigid thermoplastic phase of the rubber modified thermoplastic resin comprises structural units derived from at least one vinyl aromatic monomer, at least one monoethylenically unsaturated nitrile monomer, and at least one monomer selected from the group consisting of (C₁-C₁₂)alkyl- and aryl-(meth)acrylate monomers. Suitable (C₁-C₁₂)alkyl- and aryl-(meth)acrylate monomers, vinyl aromatic monomers and monoethylenically unsaturated nitrile monomers include those set forth hereinabove in the description of the rubber substrate. In a particular embodiment the rigid thermoplastic phase comprises a vinyl aromatic polymer having first structural units derived from one or more vinyl aromatic monomers; second structural units derived from one or more monoethylenically unsaturated nitrile monomers; and third structural units derived from one or more monomers selected from the group consisting of (C₁-C₁₂)alkyl- and aryl-(meth)acrylate monomers. Suitable vinyl aromatic polymers comprise at least about 20 wt.% structural units derived from one or more vinyl aromatic monomers. Examples of such vinyl aromatic polymers include, but are not limited to, styrene/acrylonitrile/methyl methacrylate copolymer, alpha-methylstyrene/acrylonitrile/methyl methacrylate copolymer and styrene/alpha-methylstyrene/acrylonitrile/methyl methacrylate copolymer. These copolymers may be used for the rigid thermoplastic phase either individually or as mixtures.

When structural units in copolymers are derived from one or more monoethylenically unsaturated nitrile monomers, then the nitrile monomer content in the copolymer comprising the graft copolymer and the rigid thermoplastic phase may be in one embodiment in a range of between about 5 and about 40 percent by weight, in another embodiment in a range of between about 5 and about 30 percent by weight, in another embodiment in a range of between about 10 and about 30 percent by weight, and in yet another embodiment in a range of between about 15 and about 30 percent by weight, based on the weight of the copolymer comprising the graft copolymer and the rigid thermoplastic phase.

The amount of grafting that takes place between the rubber phase and monomers comprising the rigid thermoplastic phase of the rubber modified thermoplastic resin varies with the relative amount and composition of the rubber phase. In one embodiment, greater than about 10 wt% of the rigid thermoplastic phase is chemically grafted to the rubber, based on the total amount of rigid thermoplastic phase in the composition. In another embodiment, greater than about 15 wt.% of the rigid thermoplastic phase is chemically grafted to the rubber, based on the total amount of rigid thermoplastic phase in the composition. In still another embodiment, greater than about 20 wt.% of the rigid thermoplastic phase is chemically grafted to the rubber, based on the total amount of rigid thermoplastic phase in the composition. In particular embodiments the amount of rigid thermoplastic phase chemically grafted to the rubber may be in a range of between about 5% and about 90 wt.%; between about 10% and about 90 wt.%; between about 15% and about 85 wt.%; between about 15% and about 50 wt.%; or between about 20% and about 50 wt.%, based on the total amount of rigid thermoplastic phase in the composition. In yet other embodiments, about 40 to 90 wt.% of the rigid thermoplastic phase is free, that is, non-grafted.

The rigid thermoplastic phase of the rubber modified thermoplastic resin may be present in compositions of the invention in one embodiment at a level of from about 85 to about 6 percent by weight; in another embodiment at a level of from about 65 to about 6 percent by weight; in another embodiment at a level of from about 60 to about 20 percent by weight; in another embodiment at a level of from about 75 to about 40 percent by weight, and in still another embodiment at a level of from about 60 to about 50 percent by weight based on the weight of the rubber modified thermoplastic resin. In other embodiments rigid thermoplastic phase may be present in compositions of the invention in a range of between about 90% and about 30 wt.%, based on the weight of the rubber modified thermoplastic resin.

The rigid thermoplastic phase of the rubber modified thermoplastic resin may be formed solely by polymerization carried out in the presence of rubber substrate or by addition of one or more separately polymerized rigid thermoplastic polymers to a rigid thermoplastic polymer that has been polymerized in the presence of the rubber substrate. When at least a portion of separately synthesized rigid thermoplastic phase is added to compositions, then the amount of said separately synthesized rigid thermoplastic phase added is in an amount in a range of between about 30 wt. % and about 80 wt. % based on the weight of the rubber modified thermoplastic resin. Two or more different rubber substrates each possessing a different number average particle size may be separately employed in such a polymerization reaction and then the products blended together. In illustrative embodiments wherein such products each possessing a different number average particle size of initial rubber substrate are blended together, then the ratios of said substrates may be in a range of about 90:10 to about 10:90, or in a range of about 80:20 to about 20:80, or in a range of about 70:30 to about 30:70. In some embodiments an initial rubber substrate with smaller particle size is the major component in such a blend containing more than one particle size of initial rubber substrate.

The rigid thermoplastic phase of the rubber modified thermoplastic resin may be made according to known processes, for example, mass polymerization, emulsion polymerization, suspension polymerization or combinations thereof, wherein at least a portion of the rigid thermoplastic phase is chemically bonded, i.e., "grafted" to the rubber phase via reaction with unsaturated sites present in the rubber phase. The grafting reaction may be performed in a batch, continuous or semi-continuous process. Representative procedures include, but are not limited to, those taught in U.S. Patent Nos. 3,944,631; and U.S. patent application Serial No. 08/962,458, filed October 31, 1997. The unsaturated sites in the rubber phase are provided, for example, by residual unsaturated sites in those structural units of the rubber that were derived from a graftlinking monomer.

In some embodiments of the present invention the rubber modified thermoplastic resin is made by a process which comprises monomer grafting to rubber substrate with concomitant formation of rigid thermoplastic phase, which process is performed in stages wherein at least one first monomer is grafted to rubber substrate followed by at least one second monomer different from said first monomer. In the present context the change from one graft stage to the next is defined as that point where there is a change in the identity of at least one monomer added to the rubber substrate for grafting. In one embodiment of the present invention formation of rigid thermoplastic phase and grafting to rubber substrate are performed by feeding at least one first monomer over time to a reaction mixture comprising rubber substrate. In this context a second graft stage occurs when at least one different monomer is introduced into the feed stream in the presence or absence of at least one first monomer.

At least two stages are employed for grafting, although additional stages may be employed. The first graft stage is performed with one or more monomers comprising vinyl aromatic monomers, monoethylenically unsaturated nitrile monomers, and optionally (C₁-C₁₂)akyl- and aryl-(meth)acrylate monomers. In a particular embodiment grafting is performed in a first stage with a mixture of monomers, at least one of which is selected from the group consisting of vinyl aromatic monomers and at least one of which is selected from the group consisting of monoethylenically unsaturated nitrile monomers. When a mixture comprising at least one vinyl aromatic monomer and at least one monoethylenically unsaturated nitrile monomer is employed in the first graft stage, then the wt./wt. ratio of vinyl aromatic monomer to monoethylenically unsaturated nitrile monomer is in one embodiment in a range of between about 1:1 and about 6:1, in another embodiment in a range of between about 1.5:1 and about 4:1, in still another embodiment in a range of between about 2:1 and about 3:1, and in still another embodiment in a range of between about 2.5:1 and about 3:1. In one preferred embodiment the wt./wt. ratio of vinyl aromatic monomer to monoethylenically unsaturated nitrile monomer employed in the first graft stage is about 2.6:1.

In at least one subsequent stage following said first stage, grafting is performed with one or more monomers comprising vinyl aromatic monomers, monoethylenically unsaturated nitrile monomers, and optionally (C₁-C₁₂)alkyl- and aryl-(meth)acrylate monomers. In a particular embodiment grafting is performed in at least one subsequent stage with one or more monomers, at least one of which is selected from the group consisting of (C₁-C₁₂)alkyl- and aryl-(meth)acrylate monomers. In another particular embodiment grafting is performed in at least one subsequent stage with a mixture of monomers, at least one of which is selected from the group consisting of (C₁-C₁₂)alkyl- and aryl-(meth)acrylate monomers and at least one of which is selected from the group consisting of vinyl aromatic monomers and monoethylenically unsaturated nitrile monomers. In another particular embodiment grafting is performed in at least one subsequent stage with a mixture of monomers, one of which is selected from the group consisting of (C₁-C₁₂)alkyl- and aryl-(meth)acrylate monomers; one of which is selected from the group consisting of vinyl aromatic monomers and one of which is selected from the group consisting of monoethylenically unsaturated nitrile monomers. Said(C₁-C₁₂)alkyl- and aryl-(meth)acrylate monomers, vinyl aromatic monomers and monoethylenically unsaturated nitrile monomers include those described hereinabove.

In the first graft stage the total amount of monomer employed for grafting to rubber substrate is in one embodiment in a range of between about 5 wt.% and about 98 wt.%; in another embodiment in a range of between about 5 wt.% and about 95 wt.%; in another embodiment in a range of between about 10 wt.% and about 90 wt.%; in another embodiment in a range of between about 15 wt.% and about 85 wt.%; in another embodiment in a range of between about 20 wt.% and about 80 wt.%; and in yet another embodiment in a range of between about 30 wt.% and about 70 wt.%, based on the total weight of monomer employed for grafting in all stages. In one particular embodiment the total amount of monomer employed for grafting to rubber substrate in the first stage is in a range of between about 30 wt.% and about 95 wt.% based on the total weight of monomer employed for grafting in all stages. Further monomer is then grafted to rubber substrate in one or more stages following said first stage. In one particular embodiment all further monomer is grafted to rubber substrate in one second stage following said first stage.

At least one (C₁-C₁₂)alkyl- and aryl-(meth)acrylate monomer is employed for grafting to rubber substrate in either a first stage, or in a second stage, or in both a first and a second stage of grafting monomers to rubber substrate. The total amount of said (meth)acrylate monomer employed is in one embodiment in a range of between about 95 wt.% and about 2 wt.%; in another embodiment in a range of between about 80 wt.% and about 2 wt.%; in another embodiment in a range of between about 70 wt.% and about 2 wt.%; in another embodiment in a range of between about 50 wt.% and about 2 wt.%; in another embodiment in a range of between about 45 wt.% and about 2 wt.%; and in yet another embodiment in a range of between about 45 wt.% and about 5 wt.%, based on the total weight of all monomers employed for grafting. In other embodiments of the invention the total amount of said (meth)acrylate monomer employed is in a range of between about 48 wt.% and about 18 wt.%.

In a mixture of monomers comprising at least one (C₁-C₁₂)alkyl- and aryl-(meth)acrylate monomer, the wt./wt. ratio of said (meth)acrylate monomer to the totality of other monomers employed for grafting to rubber substrate in any particular stage is in one embodiment in a range of between about 10:1 and about 1:10; in another embodiment in a range of between about 8:1 and about 1:8; in another embodiment in a range of between about 5:1 and about 1:5; in another embodiment in a range of between about 4:1 and about 1:4; in another embodiment in a range of between about 3:1 and about 1:3; in another embodiment in a range of between about 2:1 and about 1:2; and in yet another embodiment in a range of between about 1.5:1 and about 1:1.5.

Optionally, at least one additional thermoplastic resin different from the polycarbonate may be present in the compositions of the invention. Illustrative additional thermoplastic resins comprise those selected from the group consisting of (meth)acrylate homopolymers and copolymers, methyl methacrylate-butyl acrylate copolymer, methyl methacrylate-ethyl acrylate copolymer, styrene and alkylstyrene homopolymers and copolymers, styrene-acrylonitrile (SAN) copolymer, alpha-methylstyrene-acrylonitrile (AMSAN) copolymer, methyl methacrylate-styrene-acrylonitrile (MMA-SAN) terpolymer, methyl methacrylate/alpha-methylstyrene/acrylonitrile (MMA-AMSAN) terpolymer, and mixtures thereof. In some embodiments the additional thermoplastic resin different from polycarbonate is identical to or is present in addition to the separately polymerized rigid thermoplastic polymers referred to herein above. When present, the additional thermoplastic resin is present in the composition in a range of between about 1 wt.% and about 80 wt.%, or in a range of between about 20 wt.% and about 70 wt.%, or in a range of between about 25 wt.% and about 60 wt%, based on the weight of the entire composition

Compositions of the present invention may optionally comprise conventional additives known in the art including, but not limited to, stabilizers, such as color stabilizers, heat stabilizers, light stabilizers, antioxidants, and UV stabilizers; neutralizers; flame retardants, anti-drip agents, lubricants, flow promoters and other processing aids; plasticizers, antistatic agents, mold release agents, impact modifiers, fillers, and colorants such as dyes and pigments which may be organic, inorganic or organometallic; and like additives. Illustrative additives include, but are not limited to, silica, silicates, zeolites, titanium dioxide, stone powder, glass fibers or spheres, carbon fibers, carbon black, conductive carbon black, graphite, calcium carbonate, talc, mica, lithopone, zinc oxide, zirconium silicate, iron oxides, diatomaceous earth, calcium carbonate, magnesium oxide, chromic oxide, zirconium oxide, aluminum oxide, crushed quartz, clay, calcined clay, organoclay, talc, kaolin, asbestos, cellulose, wood flour, cork, cotton and synthetic textile fibers, reinforcing fillers, glass fibers, carbon fibers, conductive carbon fibers, carbon nanotubes, and metal fibers. Often more than one additive is included in compositions of the invention, and in some embodiments more than one additive of one type is included. In a particular embodiment a composition further comprises an additive selected from the group consisting of colorants, dyes, pigments, lubricants, mold release agents, stabilizers, fillers and mixtures thereof.

In another embodiment the present invention comprises methods for making the compositions disclosed herein. The compositions may be made by combining and intimately mixing the components of the composition under conditions suitable for the formation of a blend of the components, illustrative examples of which include, but are not limited to, melt mixing using, for example, a two-roll mill, a kneader, a Banbury mixer, a disc-pack processor, a single screw extruder or a co-rotating or counter-rotating twin-screw extruder, and then reducing the composition so formed to particulate form, for example by pelletizing or grinding the composition. Because of the availability of melt blending equipment in commercial polymer processing facilities, melt processing procedures are generally preferred. When compositions are prepared by extrusion, they may be prepared by using a single extruder having multiple feed ports along its length to accommodate the addition of the various components at different points in the mixing process. It is also sometimes advantageous to employ at least one vent port in each section between the feed ports to allow venting (either atmospheric or vacuum) of the melt. Those of ordinary skill in the art will be able to adjust blending times and temperatures, as well as component addition location and sequence, without undue additional experimentation.

The compositions of the present invention can be formed into useful articles. In some embodiments the articles are unitary articles comprising a composition of the present invention. In other embodiments the articles may comprise a multilayer article comprising at least one layer comprising a composition of the present invention.

Multilayer and unitary articles which can be made which comprise compositions made by the method of the present invention include, but are not limited to, articles for outdoor vehicle and device (OVAD) applications; exterior and interior components for aircraft, automotive, truck, military vehicle (including automotive, aircraft, and water-borne vehicles), scooter, and motorcycle, including panels, quarter panels, rocker panels, vertical panels, horizontal panels, trim, pillars, center posts, fenders, doors, decklids, trunklids, hoods, bonnets, roofs, bumpers, fascia, grilles, mirror housings, pillar appliques, cladding, body side moldings, wheel covers, hubcaps, door handles, spoilers, window frames, headlamp bezels and housings, tail lamp housings, tail lamp bezels, license plate enclosures, roof racks, and running boards; enclosures, housings, panels, and parts for outdoor vehicles and devices; enclosures for electrical and telecommunication devices; outdoor furniture; aircraft components; boats and marine equipment, including trim, enclosures, and housings; outboard motor housings; depth finder housings, personal water-craft; jet-skis; pools; spas; hot-tubs; steps; step coverings; building and construction applications such as glazing, fencing, decking planks, roofs; siding, particularly vinyl siding applications; windows, floors, decorative window furnishings or treatments; wall panels, and doors; outdoor and indoor signs; enclosures, housings, panels, and parts for automatic teller machines (ATM); enclosures, housings, panels, and parts for lawn and garden tractors, lawn mowers, and tools, including lawn and garden tools; window and door trim; sports equipment and toys; enclosures, housings, panels, and parts for snowmobiles; recreational vehicle panels and components; playground equipment; articles made from plastic-wood combinations; golf course markers; utility pit covers; mobile phone housings; radio sender housings; radio receiver housings; light fixtures; light switches; electrical sockets; lighting appliances; reflectors; network interface device housings; transformer housings; air conditioner housings; cladding or seating for public transportation; cladding or seating for trains, subways, or buses; meter housings; antenna housings; cladding for satellite dishes; and like applications. Said articles may be prepared by a variety of known processes and fabrication steps which include, but are not limited to, profile extrusion, sheet extrusion, coextrusion, extrusion blow molding, thermoforming, injection molding, compression molding, in-mold decoration, baking in a paint oven, plating, and lamination.

Without further elaboration, it is believed that one skilled in the art can, using the description herein, utilize the present invention to its fullest extent. The following examples are included to provide additional guidance to those skilled in the art in practicing the claimed invention. The examples provided are merely representative of the work that contributes to the teaching of the present application. Accordingly, these examples are not intended to limit the invention, as defined in the appended claims, in any manner.

In the following examples Vicat B data at 120°C were determined according to ISO 306. Flex plate impact strength was determined according to ISO 6603/2. Notched Izod impact strength was determined according to ISO 180/1A. Melt volume rate (MVR) at 260°C was determined on granulate using a 5 kilogram weight according to ISO 1133.

### EXAMPLES 1-5

The following examples illustrate preparation of rubber modified thermoplastic resin by staged feeding of monomers for grafting as is described in pending U.S. patent application Serial No. 10/748,394, filed December 30, 2003. Agitated reaction mixtures comprising 212.8 parts demineralized water and 45 parts of a PBA with broad particle size distribution were heated to 60°C. Various amounts of a monomer mixture consisting of styrene and acrylonitrile (2:1 wt/wt ratio) were fed to each reaction in a first stage while various amounts of a monomer mixture consisting of styrene, acrylonitrile and methyl methacrylate (40:25:35 wt/wt/wt ratio) were fed to each reaction in a second stage. The monomer feed times were adjusted according to the relative amounts of monomer being fed so as to keep the overall monomer flow rates constant at 55 parts total monomer being added continuously over 90 minutes. In addition 0.225 parts cumene hydroperoxide and an activator solution of 5 parts demineralized water, 0.0033 parts ferric sulfate heptahydrate, 0.3 parts sodium formaldehyde sulfoxylate and 0.0165 parts disodium salt of ethylene diamine tetraacetic acid were fed continuously to each reaction mixture over 125 minutes. The final products comprising rigid thermoplastic phase and grafted rubber substrate were coagulated with aqueous calcium chloride and dried in a fluid bed dryer at 70°C. Table 1 shows the parts by weight (pbw) of monomer fed to each reaction mixture. All values for wt. % gel represent the acetone-insoluble portion of the product, which typically comprises PBA and any additional monomer species grafted to PBA.

**TABLE 1**

| Example | 1 | 2 | 3 | 4 | 5 |
|---|---|---|---|---|---|
| 1^{st} Stage monomer | | | | | |
| styrene | 6.11 | 12.22 | 18.34 | 24.45 | 30.56 |
| acrylonitrile | 3.06 | 6.11 | 9.17 | 12.22 | 15.28 |
| | | | | | |
| 2^{nd} Stage monomer | | | | | |
| styrene | 18.33 | 14.67 | 11 | 7.33 | 3.67 |
| acrylonitrile | 11.46 | 9.17 | 6.87 | 4.58 | 2.29 |
| methyl methacrylate | 16.04 | 12.83 | 9.62 | 6.42 | 3.21 |
| Wt. % Gel in product | 50.5 | 51 | 54 | 59 | 63 |

### EXAMPLES 6-9

Preparations of rubber modified thermoplastic resin by staged feeding of monomers for grafting were run in which 45 parts by weight of a poly(butyl acrylate) (PBA) rubber substrate was grafted in two stages with 55 parts by weight of a monomer mixture comprising various % ratios (wt./wt./wt. totaling 100) of styrene-acrylonitrile-methyl methacrylate under conditions similar to those described for Examples 1-5. The rubber substrate in each case was prepared by a continuous procedure and comprised a broad rubber particle size distribution. Table 2 shows the amounts of styrene, acrylonitrile and methyl methacrylate employed in each graft reaction at each stage and characterization data for the resulting product.

**TABLE 2**

| Example | 6 | 7 | 8 | 9 |
|---|---|---|---|---|
| 1^{st} Stage monomer | | | | |
| Parts styrene | 12.1 | 12.1 | 16.59 | 20.27 |
| Parts acrylonitrile | 4.54 | 4.54 | 7.53 | 9.98 |
| Parts MMA | 13.61 | 13.61 | 6.12 | 0 |
| 2^{nd} Stage monomer | | | | |
| Parts styrene | 9.9 | 16.58 | 13.58 | 9.9 |
| Parts acrylonitrile | 3.71 | 8.17 | 6.16 | 3.71 |
| Parts MMA | 11.14 | 0 | 5.01 | 11.14 |
| Wt. % Gel in product | 55 | 60.6 | 60.6 | 64.6 |

### EXAMPLE 10

The preparation of rubber modified thermoplastic resin was performed under conditions similar to those of Example 9 except that 45 parts of a PBA with 475nm number average particle size was employed. Also, a dimer fatty acid surfactant was employed and the final product comprising rigid thermoplastic phase and grafted rubber substrate was coagulated with sulfuric acid.

### EXAMPLE 11

The preparation of rubber modified thermoplastic resin was performed under conditions similar to those of Example 9 except that 45 parts of a PBA with 90nm number average particle size was employed. Also, a dimer fatty acid surfactant was employed and the final product comprising rigid thermoplastic phase and grafted rubber substrate was coagulated with sulfuric acid.

### EXAMPLE 12

The preparation of rubber modified thermoplastic resin was performed under conditions similar to those of Example 9 except that 45 parts of a PBA with 475nm number average particle size was employed. Also, sodium lauryl sulfate surfactant was employed (for example, using a method similar to that described in European Patent Application EP0913408) and the final product comprising rigid thermoplastic phase and grafted rubber substrate was coagulated with calcium chloride.

### EXAMPLE 13

The preparation of rubber modified thermoplastic resin was performed under conditions similar to those of Example 9 except that 45 parts of a PBA with 90nm number average particle size was employed. Also, sodium lauryl sulfate surfactant was employed and the final product comprising rigid thermoplastic phase and grafted rubber substrate was coagulated with calcium chloride.

### EXAMPLE 14

A preparation of rubber modified thermoplastic resin by staged feeding of monomers for grafting was run in which 45 parts by weight of a poly(butyl acrylate) (PBA) rubber substrate was grafted in two stages with 55 parts by weight of a monomer mixture comprising various % ratios (wt./wt./wt. totaling 100) of styrene-acrylonitrile-methyl methacrylate. The rubber substrate was prepared by a continuous procedure and comprised a broad rubber particle size distribution. In the first stage the rubber was grafted with 22.69 pbw styrene and 7.56 pbw acrylonitrile. In the second stage the rubber was grafted with 9.9 pbw styrene, 3.71 pbw acrylonitrile and 11.14 pbw methyl methacrylate. A rubber modified thermoplastic resin was obtained.

### EXAMPLES 15-20

Preparations of rubber modified thermoplastic resin by staged feeding of monomers for grafting were run in which 45 parts by weight of a poly(butyl acrylate) (PBA) rubber substrate was grafted in two stages with 55 parts by weight of a monomer mixture comprising various % ratios (wt./wt./wt. totaling 100) of styrene-acrylonitrile-methyl methacrylate under conditions similar to those described for Examples 1-5. The PBA employed was a blend of 100nm mean particle size PBA and 500nm mean particle size PBA in a 70:30 ratio, respectively. Table 3 shows the amounts of styrene, acrylonitrile and methyl methacrylate employed in each graft reaction at each stage.

**TABLE 3**

| Example | 15 | 16 | 17 | 18 | 19 | 20 |
|---|---|---|---|---|---|---|
| 1^{st} Stage monomer | | | | | | |
| styrene | 20.44 | 20.44 | 20.44 | 21.96 | 21.96 | 21.96 |
| acrylonitrile | 10.07 | 10.07 | 10.07 | 8.54 | 8.54 | 8.54 |
| | | | | | | |
| 2^{nd} Stage monomer | | | | | | |
| styrene | 9.80 | 9.80 | 7.35 | 9.80 | 9.80 | 7.35 |
| acrylonitrile | 6.13 | 3.68 | 2.45 | 6.13 | 3.68 | 2.45 |
| methyl methacrylate | 8.58 | 11.03 | 14.70 | 8.58 | 11.03 | 14.70 |

### EXAMPLES 21-25 AND COMPARATIVE EXAMPLE

Compositions comprising 33 parts by weight bisphenol A polycarbonate (with a weight average molecular weight relative to polystyrene standards in a range of between about 28,000 to about 36,000 g/mol) and 40 parts by weight of a suspension-prepared SAN (derived from 75% styrene and 25% acrylonitrile) were combined with 27 parts by weight of various rubber modified thermoplastic resins prepared by staged feeding of monomers for grafting. In addition all the compositions comprised 4 parts by weight of a copolymer derived from methyl methacrylate and butyl acrylate; 1.28 parts by weight of mold release agents, heat stabilizers and UV screeners; 12 parts by weight coated titanium dioxide; and 0.1 parts by weight of other pigments. Compositions in the examples were prepared by dry blending components in a mixer following by extrusion using typical processing equipment at around 200-250°C. The extrudates were pelletized, dried and molded at different melt temperatures. Table 4 shows the various rubber modified thermoplastic resins prepared by staged feeding of styrene, acrylonitrile and methyl methacrylate monomers for grafting (referred to as M-ASA-graft). A comparative example (C.Ex.) was prepared which had the same composition as the other examples except that it employed a rubber modified thermoplastic resin (referred to as ASA) prepared by grafting 45 pbw poly(butyl acrylate) with 36.5 pbw styrene and 19 pbw acrylonitrile in a single stage. Test specimens were molded at 255°C melt temperature and also at 300°C melt temperature to stimulate abusive conditions. The molded test specimens were subjected to color measurements in the CIE L*a*b* space using a MacBeth 7000 spectrophotometer for color measurement. Values for delta E showing the difference in color between specimens molded at 255°C and at 300°C are given in Table 4.

Selected physical properties for test specimens molded at 255°C (unless noted) are also shown in Table 4.

**TABLE 4**

| Example | C.Ex. | 21 | 22 | 23 | 24 | 25 |
|---|---|---|---|---|---|---|
| M-ASA-graft | ASA | Ex. 6 | Ex. 7 | Ex. 8 | Ex. 9 | Ex. 14 |
| delta E | 3.39 | 0.98 | 2.19 | 1.36 | 1.45 | 0.96 |
| 60° Gloss* | 79 | 89 | 86 | 91 | 90 | 93 |
| Vicat B, °C | 108 | 106.5 | 107.4 | 107.3 | 108 | 107.5 |
| Flex plate impact, Joules | 14.7 | 17.6 | 18.7 | 20.9 | 11.9 | 21.9 |
| Izod impact, kJ/m² | 11.8 | 8.7 | 10.2 | 11.7 | 11.8 | 11.0 |
| MVR, cm³/10min. | 23.2 | 28 | 25.6 | 24 | 23.8 | 24.8 |

| | | | | | | |
|---|---|---|---|---|---|---|
| *determined on parts molded at 300°C | | | | | | |

The data show that compositions containing rubber modified thermoplastic resins comprising structural units derived from methyl methacrylate possess better color properties and gloss upon exposure to elevated temperatures than does a control containing rubber modified thermoplastic resin prepared without structural units derived from methyl methacrylate.

### EXAMPLES 26-29 AND COMPARATIVE EXAMPLE

Compositions were prepared as described in Examples 21-25 with similar amounts of components. Table 5 shows the various rubber modified thermoplastic resins prepared by staged feeding of styrene, acrylonitrile and methyl methacrylate monomers for grafting (referred to as M-ASA-graft). A comparative example (C.Ex.) was prepared which had the same composition as the other examples except that it employed a rubber modified thermoplastic resin (referred to as ASA) prepared by grafting 45 pbw poly(butyl acrylate) with 36.5 pbw styrene and 19 pbw acrylonitrile in a single stage. Test specimens were molded at 255°C melt temperature and also at 300°C melt temperature to stimulate abusive conditions. The molded test specimens were subjected to color measurements in the CIE L*a*b* space using a MacBeth 7000 spectrophotometer for color measurement. Values for delta E showing the difference in color between specimens molded at 255°C and at 300°C are given in Table 5. Selected physical properties for test specimens molded at 255°C (unless noted) are also shown in Table 5.

**TABLE 5**

| Example | C.Ex. | 26 | 27 | 28 | 29 |
|---|---|---|---|---|---|
| M-ASA-graft | ASA | Ex.10 | Ex.11 | Ex. 12 | Ex. 13 |
| delta E | 3.39 | 1.29 | 0.80 | 1:38 | 1.22 |
| 60° Gloss* | 79 | 96 | 86 | 95 | 88 |
| Vicat B, °C | 108 | 107.2 | 107.4 | 107.7 | 107.8 |
| Flex plate impact, Joules | 14.7 | 8.4 | 47.9 | 18 | 23 |
| Izod impact, kJ/m² | 11.8 | 11.5 | 12.2 | 10 | 11.8 |
| MVR, cm³/10min. | 23.2 | 21.9 | 18.3 | 23.0 | 13.6 |

| | | | | | |
|---|---|---|---|---|---|
| *determined on parts molded at 300°C | | | | | |

The data show that compositions containing rubber modified thermoplastic resins comprising structural units derived from methyl methacrylate possess better color properties and gloss upon exposure to elevated temperatures than does a control containing rubber modified thermoplastic resin prepared without structural units derived from methyl methacrylate.

### EXAMPLES 30-32 AND COMPARATIVE EXAMPLE

Compositions were prepared as described in Examples 15-19 with similar amounts of components except that 40 parts by weight of various thermoplastic resins were added in place of 40 parts by weight of a suspension-prepared SAN derived from 75% styrene and 25% acrylonitrile. The various thermoplastic resins were a terpolymer derived from 40% styrene, 25% acrylonitrile and 35% methyl methacrylate (designated "MMA-SAN"); a copolymer derived from 30% alpha-methyl styrene and 70% acrylonitrile (designated "AMSAN"); and a copolymer derived from 66% styrene and 34% acrylonitrile (designated "SAN 66:33"). Each composition comprised 27 parts by weight of the rubber modified thermoplastic resin of Example 9. Table 6 shows the identity of the added thermoplastic resin. A comparative example (C.Ex.) was prepared which had the same composition as the other examples except that it employed 40 parts by weight of a suspension-prepared SAN (derived from 75% styrene and 25% acrylonitrile and designated "SAN 75:25") and a rubber modified thermoplastic resin (referred to as ASA) prepared by grafting 45 pbw poly(butyl acrylate) with 36.5 pbw styrene and 19 pbw acrylonitrile in a single stage. Test specimens were molded at 255°C melt temperature and also at 300°C melt temperature to stimulate abusive conditions. The molded test specimens were subjected to color measurements in the CIE L*a*b* space using a MacBeth 7000 spectrophotometer for color measurement. Values for delta E showing the difference in color between specimens molded at 255°C and at 300°C are given in Table 6. Selected physical properties for test specimens molded at 255°C (unless noted) are also shown in Table 6.

**TABLE6**

| Example | C.Ex. | 30 | 31 | 32 |
|---|---|---|---|---|
| Thermoplastic resin | SAN 75:25 | MMA-SAN | AMSAN | SAN 66:33 |
| delta E | 3.39 | 1.30 | 1.34 | 1.95 |
| 60° Gloss* | 79 | 90 | 90 | 90 |
| Vicat B, °C | 108 | 100.9 | 117.5 | 108.9 |
| Flex plate impact, Joules | 14.7 | 43.5 | 49.6 | 37.4 |
| Izod impact, kJ/m² | 11.8 | 17.6 | 19.8 | 18.9 |
| MVR, cm³/10min. | 23.2 | 10.6 | 6.9 | 14.6 |

| | | | | |
|---|---|---|---|---|
| *determined on parts molded at 300°C | | | | |

The data show that compositions containing rubber modified thermoplastic resins comprising structural units derived from methyl methacrylate possess better color properties and gloss upon exposure to elevated temperatures than does a control containing rubber modified thermoplastic resin prepared without structural units derived from methyl methacrylate.

### EXAMPLE 33 AND COMPARATIVE EXAMPLE

A composition was prepared comprising the following components: 18 pbw bisphenol A polycarbonate with a weight average molecular weight relative to polystyrene standards in a range of between about 18,000 and about 23,000 g/mol; 42 pbw bisphenol A polycarbonate with a weight average molecular weight relative to polystyrene standards in a range of between about 28,000 and about 36,000 g/mol; and 22 parts by weight of a suspension-prepared SAN (derived from 75% styrene and 25% acrylonitrile). The composition further comprised 18 parts by weight of a rubber modified thermoplastic resin prepared as in Example 9. In addition the composition comprised 0.5 parts by weight of mold release agents and heat stabilizers; 12 parts by weight coated titanium dioxide; and 0.1 parts by weight of other pigments. Compositions in the examples were prepared by dry blending components in a mixer following by extrusion using typical processing equipment. The extrudates were pelletized, dried and molded. A comparative example (C.Ex.) was prepared which had the same composition except that it employed a rubber modified thermoplastic resin (referred to as ASA) prepared by grafting 45 pbw poly(butyl acrylate) with 36.5 pbw styrene and 19 pbw acrylonitrile in a single stage. Test specimens were molded at 260°C melt temperature and also at 320°C melt temperature to stimulate abusive conditions. The molded test specimens were subjected to color measurements in the CIE L*a*b* space using a MacBeth 7000 spectrophotometer for color measurement. Values for delta E showing the difference in color between specimens molded at 260°C and at 320°C were 3.33 for the comparative example and 1.59 for the example containing the rubber modified thermoplastic resin prepared as in Example 9.

### EXAMPLE 34 AND COMPARATIVE EXAMPLE

A composition was prepared comprising the following components: 50 pbw bisphenol A polycarbonate with a weight average molecular weight relative to polystyrene standards in a range of between about 28,000 and about 36,000 g/mol; 27 pbw bisphenol A polycarbonate with a weight average molecular weight relative to polystyrene standards in a range of between about 18,000 and about 23,000 g/mol; and 9.5 parts by weight of a suspension-prepared SAN (derived from 75% styrene and 25% acrylonitrile). The composition further comprised 13.5 parts by weight of a rubber modified thermoplastic resin prepared as in Example 9. In addition the composition comprised 0.5 parts by weight of mold release agents and heat stabilizers; 12 parts by weight coated titanium dioxide; and 0.1 parts by weight of other pigments. Compositions in the examples were prepared by dry blending components in a mixer following by extrusion using typical processing equipment.

The extrudates were pelletized, dried and molded. A comparative example (C.Ex.) was prepared which had the same composition except that it employed a rubber modified thermoplastic resin (referred to as ASA) prepared by grafting 45 pbw poly(butyl acrylate) with 36.5 pbw styrene and 19 pbw acrylonitrile in a single stage. Test specimens were molded at 260°C melt temperature and also at 320°C melt temperature to stimulate abusive conditions. The molded test specimens were subjected to color measurements in the CIE L*a*b* space using a MacBeth 7000 spectrophotometer for color measurement. Values for delta E showing the difference in color between specimens molded at 260°C and at 320°C were 3.34 for the comparative example and 1.78 for the example containing the rubber modified thermoplastic resin prepared as in Example 9.

While the invention has been illustrated and described in typical embodiments, it is not intended to be limited to the details shown, since various modifications and substitutions can be made without departing in any way from the spirit of the present invention. As such, further modifications and equivalents of the invention herein disclosed may occur to persons skilled in the art using no more than routine experimentation, and all such modifications and equivalents are believed to be within the spirit and scope of the invention as defined by the following claims. All Patents and Patent Applications cited herein are incorporated herein by reference.

## Claims

1. A composition comprising (i) at least one polycarbonate; (ii) optionally, at least one additional thermoplastic resin different from polycarbonate; and (iii) at least one acrylonitrile-styrene-acrylate (ASA)-type resin comprising a discontinuous elastomeric phase dispersed in a rigid thermoplastic phase, wherein at least a portion of the rigid thermoplastic phase is grafted to the elastomeric phase, and wherein the elastomeric phase comprises a polymer having structural units derived from at least one (C₁-C₁₂)alkyl(meth)acrylate monomer and wherein the rigid thermoplastic phase comprises structural units derived from at least one vinyl aromatic monomer, at least one monoethylenically unsaturated nitrile monomer, and at least one monomer selected from the group consisting of (C₁-C₁₂)alkyl- and aryl-(meth)acrylate monomers, and wherein the ASA-type resin is prepared by a method comprising the steps of:
(a) polymerizing a mixture of monomers in a first stage in the presence of the elastomeric phase, wherein at least one monomer is selected from the group consisting of vinyl aromatic monomers, at least one of monomer is selected from the group consisting of monoethylenically unsaturated nitrile monomers, and optionally at least one monomer is selected from the group consisting of (C₁-C₁₂)alkyl(meth)acrylate monomers, followed by
(b) polymerizing one or more monomers in at least one subsequent stage in the presence of the elastomeric phase from (a), wherein the one or more monomers comprise at least one monomer selected from the group consisting of vinyl aromatic monomers, at least one of monomer selected from the group consisting of monoethylenically unsaturated nitrile monomers, and optionally at least one monomer selected from the group consisting of (C₁-C₁₂)alkyl(meth)acrylate monomers;
wherein the monomer selected from the group consisting of (C₁-C₁₂)alkyl- and aryl-(meth)acrylate monomers is present in at least one of steps (a) and (b).

2. The composition of claim 1 wherein the polycarbonate comprises structural units derived from at least one dihydroxy aromatic hydrocarbon represented by the formula (I):
(I) HO---D---OH
wherein D is a divalent aromatic radical with the structure of formula (II): 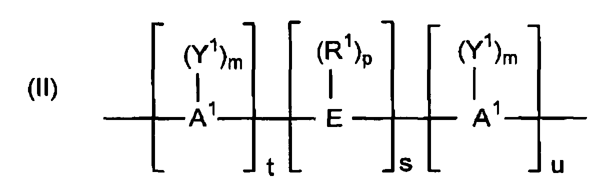 wherein A¹ is selected from the group consisting of an aromatic group, phenylene, biphenylene and naphthylene;
E is selected from the group consisting of alkylene, alkylidene, methylene, ethylene, ethylidene, propylene, propylidene, isopropylidene, butylene, butylidene, isobutylidene, amylene, amylidene, isoamylidene, a cycloaliphatic group, cyclopentylidene, cyclohexylidene, 3,3,5-trimethylcyclohexylidene, methylcyclohexylidene, 2-[2.2.1]-bicycloheptylidene, neopentylidene, cyclopentadecylidene, cyclododecylidene, adamantylidene; a sulfur-containing linkage, sulfide, sulfoxide, sulfone; a phosphorus-containing linkage, phosphinyl, phosphonyl; an ether linkage; a carbonyl group; a tertiary nitrogen group; a silicon-containing linkage, silane, siloxy; and two or more alkylene or alkylidene groups connected by a moiety different from alkylene or alkylidene and selected from the group consisting of an aromatic linkage; a tertiary nitrogen linkage; an ether linkage; a carbonyl linkage; a silicon-containing linkage, silane, siloxy; a sulfur-containing linkage, sulfide, sulfoxide, sulfone; a phosphorus-containing linkage, phosphinyl and phosphonyl;
R¹ independently at each occurrence is selected from the group consisting of a monovalent hydrocarbon group, alkenyl, allyl, alkyl, aryl, aralkyl, alkaryl, cycloalkyl, a halogen-substituted monovalent hydrocarbon group, a fluoro-substituted monovalent hydrocarbon group, a chloro-substituted monovalent hydrocarbon group, dichloroalkylidene, and gem-dichloroalkylidene,
Y¹ independently at each occurrence is selected from the group consisting of an inorganic atom, halogen, fluorine, bromine, chlorine, iodine; an inorganic group containing more than one inorganic atom, nitro; an organic group, a monovalent hydrocarbon group, alkenyl, allyl, alkyl, C₁-C₆ alkyl, aryl, aralkyl, alkaryl, cycloalkyl, and an oxy group, OR² wherein R² is a monovalent hydrocarbon group selected from the group consisting of alkyl, aryl, aralkyl, alkaryl, cycloalkyl;
"m" represents any integer from and including zero through the number of replaceable hydrogens on A¹ available for substitution;
"p" represents an integer from and including zero through the number of replaceable hydrogens on E available for substitution;
"t" represents an integer equal to at least one;
"s" represents an integer equal to either zero or one; and
"u" represents any integer including zero.

3. The composition of claim 1 wherein the polycarbonate comprises structural units derived from at least one dihydroxy aromatic hydrocarbon selected from the group consisting of bis(4-hydroxyphenyl)sulfide, bis(4-hydroxyphenyl) ether, bis(4-hydroxyphenyl)sulfone, bis(4-hydroxyphenyl)sulfoxide, 1,4-dihydroxybenzene, 4,4'-oxydiphenol, 2,2-bis(4-hydroxyphenyl)hexafluoropropane, 4,4'-(3,3,5-trimethylcyclohexylidene)diphenol; 4,4'-bis(3,5-dimethyl)diphenol, 1,1-bis(4-hydroxy-3-methylphenyl)cyclohexane; 4,4-bis(4-hydroxyphenyl)heptane; 2,4'-dihydroxydiphenylmethane; bis(2-hydroxyphenyl)methane; bis(4-hydroxyphenyl)methane; bis(4-hydroxy-5-nitrophenyl)methane; bis(4-hydroxy-2,6-dimethyl-3-methoxyphenyl)methane; 1,1-bis(4-hydroxyphenyl)ethane; 1,2-bis(4-hydroxyphenyl)ethane; 1,1-bis(4-hydroxy-2-chlorophenyl)ethane; 2,2-bis(3-phenyl-4-hydroxyphenyl)propane; 2,2-bis(4-hydroxy-3-methylphenyl)propane; 2,2-bis(4-hydroxy-3-ethylphenyl)propane; 2,2-bis(4-hydroxy-3-isopropylphenyl)propane; 2,2-bis(4-hydroxy-3,5-dimethylphenyl)propane; 3,5,3',5'-tetrachloro-4,4'-dihydroxyphenyl)propane; bis(4-hydroxyphenyl)cyclohexylmethane; 2,2-bis(4-hydroxyphenyl)-1-phenylpropane; 2,4'-dihydroxyphenyl sulfone; dihydroxy naphthalene; 2,6-dihydroxy naphthalene; hydroquinone; resorcinol; C₁₋₃ alkyl-substituted resorcinols; methyl resorcinol, catechol, 1,4-dihydroxy-3-methylbenzene; 2,2-bis(4-hydroxyphenyl)butane; 2,2-bis(4-hydroxyphenyl)-2-methylbutane; 1,1-bis(4-hydroxyphenyl)cyclohexane; 4,4'-dihydroxydiphenyl; 2-(3-methyl-4-hydroxyphenyl-2-(4-hydroxyphenyl)propane; 2-(3,5-dimethyl-4-hydroxyphenyl)-2-(4-hydroxyphenyl)propane; 2-(3-methyl-4-hydroxyphenyl)-2-(3,5-dimethyl-4-hydroxyphenyl)propane; bis(3,5-dimethylphenyl-4-hydroxyphenyl)methane; 1,1-bis(3,5-dimethylphenyl-4-hydroxyphenyl)ethane; 2,2-bis(3,5-dimethylphenyt-4-hydroxyphenyl)propane; 2,4-bis(3,5-dimethylphenyl-4-hydroxyphenyl)-2-methylbutane; 3,3-bis(3,5-dimethylphenyl-4-hydroxyphenyl)pentane; 1,1-bis(3,5-dimethylphenyl-4-hydroxyphenyl)cyclopentane; 1,1-bis(3,5-dimethylphenyl-4-hydroxyphenyl)cyclohexane; bis(3,5-dimethyl-4-hydroxyphenyl) sulfoxide, bis(3,5-dimethyl-4-hydroxyphenyl) sulfone, bis(3,5-dimethylphenyl-4-hydroxyphenyl)sulfide; 3-(4-hydroxyphenyl)-1,1,3-trimethylindan-5-ol; 1-(4-hydroxyphenyl)-1,3,3-trimethylindan-5-ol; 2,2,2',2'-tetrahydro-3,3,3',3'-tetramethyl-1,1'-spirobi[1H-indene]-6,6'-diol and mixtures comprising at least one of the foregoing dihydroxy-aromatic compounds.

4. The composition of claim 1 wherein the polycarbonate comprises structural units derived from at least one dihydroxy aromatic hydrocarbon represented by the formula: 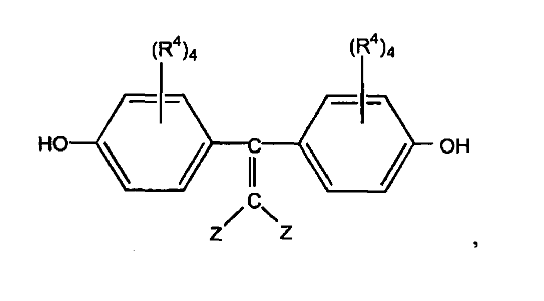 where independently each R⁴ is hydrogen, chlorine, bromine or a C₁₋₃₀ monovalent hydrocarbon or hydrocarbonoxy group, each Z is hydrogen, chlorine or bromine, subject to the provision that at least one Z is chlorine or bromine.

5. The composition of claim 1 wherein the polycarbonate comprises structural units derived from at least one dihydroxy aromatic hydrocarbon represented by the formula: 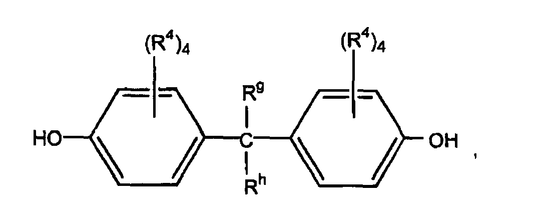 where independently each R⁴ is hydrogen, chlorine, bromine or a C₁₋₃₀ monovalent hydrocarbon or hydrocarbonoxy group, and independently R^{g} and R^{h} are hydrogen or a C₁₋₃₀ hydrocarbon group.

6. The composition of claim 5 wherein the dihydroxy aromatic hydrocarbon comprises bisphenol A.

7. The composition of claim 1 wherein the polycarbonate has a weight average molecular weight in the range of between about 18,000 and about 40,000 g/mol, as determined versus polystyrene standards.

8. The composition of claim 1 wherein the polycarbonate comprises a mixture of at least two polycarbonates of different weight average molecular weight.

9. The composition of claim 8 wherein the mixture comprises a polycarbonate with weight average molecular weight between about 18,000 and about 23,000 g/mol in combination with a polycarbonate with weight average molecular weight between about 28,000 and about 36,000 g/mol, relative to polystyrene standards.

10. The composition of claim 1 wherein the polycarbonate is present in an amount in a range of between about 5 wt.% and about 95 wt.%, based on the weight of the entire composition.

11. The composition of claim 1, wherein the additional thermoplastic resin is selected from the group consisting of (meth)acrylate homopolymers and copolymers, methyl methacrylate-butyl acrylate copolymer, methyl methacrylate-ethyl acrylate copolymer, styrene and alkylstyrene homopolymers and copolymers, styrene-acrylonitrile (SAN) copolymer, alpha-methylstyrene-acrylonitrile (AMSAN) copolymer, methyl methacrylate-styrene-acrylonitrile (MMA-SAN) terpolymer, methyl methacrylate/alpha-methylstyrene/acrylonitrile (MMA-AMSAN) terpolymer, and mixtures thereof.

12. The composition of claim 11, wherein the additional thermoplastic resin is present in the composition in a range of between about 1 wt.% and about 80 wt.%, based on the weight of the entire composition.

13. The composition of claim 1, wherein the alkyl(meth)acrylate monomer is butyl acrylate.

14. The composition of claim 1, wherein the elastomeric phase further comprises structural units derived from at least one polyethylenically unsaturated monomer.

15. The composition of claim 14, wherein the polyethylenically unsaturated monomer is selected from the group consisting of butylene diacrylate, divinyl benzene, butene diol dimethacrylate, trimethylolpropane tri(meth)acrylate, allyl methacrylate, diallyl methacrylate, diallyl maleate, diallyl fumarate, diallyl phthalate, triallyl methacrylate, triallylisocyanurate, triallylcyanurate, the acrylate of tricyclodecenylalcohol and mixtures thereof.

16. The composition of claim 1, wherein the elastomeric phase comprises about 10 to about 80 percent by weight of the ASA-type resin.

17. The composition of claim 1, wherein the elastomeric phase comprises about 35 to about 80 percent by weight of the ASA-type resin.

18. The composition of claim 1, wherein the elastomeric phase initially comprises particles selected from the group consisting of a mixture of particles sizes with at least two number average particle size distributions and a broad size distribution having particles ranging in size from about 50nm to about 1000nm.

19. The composition of claim 18, wherein the two number average particle size distributions are each in a range of between about 80nm and about 500nm.

20. The composition of claim 1, wherein at least about 5 weight % to about 90 weight % of rigid thermoplastic phase is chemically grafted to the elastomeric phase, based on the total amount of rigid thermoplastic phase in the composition.

21. The composition of claim 1, wherein the rigid thermoplastic phase comprises structural units derived from styrene, acrylonitrile and methyl methacrylate; or alpha-methyl styrene, acrylonitrile and methyl methacrylate; or styrene, alpha-methyl styrene, acrylonitrile and methyl methacrylate.

22. The composition of claim 21, wherein the wt./wt. ratio of styrene, alpha-methyl styrene or mixture thereof to acrylonitrile is in a range of between about 1.5:1 and about 4:1.

23. The composition of claim 21, wherein the wt./wt. ratio of styrene, alpha-methyl styrene or mixture thereof to acrylonitrile is in a range of between about 2:1 and about 3:1.

24. The composition of claim 21, wherein the wt./wt. ratio of styrene, alpha-methyl styrene or mixture thereof to acrylonitrile is about 2.6:1.

25. The composition of claim 21, wherein the wt./wt. ratio of methyl methacrylate to the total of vinyl aromatic monomer and monoethylenically unsaturated nitrile monomer is in a range of between about 4:1 and about 1:4.

26. The composition of claim 1, wherein the amount of (C₁-C₁₂)alkyl- or aryl-(meth)acrylate monomer employed for grafting to rubber substrate is in a range of between about 70 wt.% and about 2 wt.%, based on the total weight of all monomers employed for grafting.

27. The composition of claim 1, further comprising at least one additive selected from the group consisting of colorants, dyes, pigments, lubricants, stabilizers, mold release agents, fillers and mixtures thereof.

28. The composition of claim 1 comprising (i) between about 5 wt.% and about 95 wt.%, based on the weight of the entire composition, of at least one polycarbonate comprising structural units derived from bisphenol A; (ii) between about 1 wt.% and about 80 wt.%, based on the weight of the entire composition, of at least one additional thermoplastic resin different from polycarbonate selected from the group consisting of (meth)acrylate homopolymers and copolymers, methyl methacrylate-butyl acrylate copolymer, methyl methacrylate-ethyl acrylate copolymer, styrene and alkylstyrene homopolymers and copolymers, styrene-acrylonitrile (SAN) copolymer, alpha-methylstyrene-acrylonitrile (AMSAN) copolymer, methyl methacrylate-styrene-acrylonitrile (MMA-SAN) terpolymer, methyl methacrylate/alpha-methylstyrene/acrylonitrile (MMA-AMSAN) terpolymer, and mixtures thereof; and (iii) at least one acrylonitrile-styrene-acrylate (ASA)-type resin comprising a discontinuous elastomeric phase dispersed in a rigid thermoplastic phase, wherein at least a portion of the rigid thermoplastic phase is grafted to the elastomeric phase, and
wherein the elastomeric phase comprises structural units derived from butyl acrylate; the rigid thermoplastic phase comprises structural units derived from styrene, acrylonitrile and methyl methacrylate; or from alpha-methyl styrene, acrylonitrile and methyl methacrylate; or from styrene, alpha-methyl styrene, acrylonitrile and methyl methacrylate; and
wherein the wt./wt. ratio of styrene, alpha-methyl styrene or mixture thereof to acrylonitrile is in a range of between about 1.5:1 and about 4:1; and wt./wt. ratio of methyl methacrylate to the total of other monomers is in a range of between about 4:1 and about 1:4.

29. The composition of claim 1 comprising (i) at least one polycarbonate comprising structural units derived from bisphenol A; (ii) at least one additional thermoplastic resin different from polycarbonate selected from the group consisting of (meth)acrylate homopolymers and copolymers, methyl methacrylate-butyl acrylate copolymer, methyl methacrylate-ethyl acrylate copolymer, styrene and alkylstyrene homopolymers and copolymers, styrene-acrylonitrile (SAN) copolymer, alpha-methylstyrene-acrylonitrile (AMSAN) copolymer, methyl methacrylate-styrene-acrylonitrile (MMA-SAN) terpolymer, methyl methacrylate/alpha-methylstyrene/acrylonitrile (MMA-AMSAN) terpolymer, and mixtures thereof; and (iii) at least one acrylonitrile-styrene-acrylate (ASA)-type resin comprising a discontinuous elastomeric phase dispersed in a rigid thermoplastic phase, wherein at least a portion of the rigid thermoplastic phase is grafted to the elastomeric phase, and wherein the elastomeric phase comprises a polymer having structural units derived from at least one (C₁-C₁₂)-alkyl(meth)acrylate monomer.

30. The composition of claim 29, wherein the polycarbonate is present in a range of between about 5 wt.% and about 95 wt.%, based on the weight of the entire composition.

31. The composition of claim 29, wherein the alkyl(meth)acrylate monomer of the elastomeric phase comprises butyl acrylate.

32. The composition of claim 29, wherein the alkyl(meth)acrylate monomer polymerized in the presence of the elastomeric phase is present in step (b).

33. The composition of claim 29, wherein the amount of alkyl- (meth)acrylate monomer employed for grafting to rubber substrate is in a range of between about 70 wt.% and about 2 wt.%, based on the total weight of all monomers employed for grafting.

34. The composition of claim 29, wherein the alkyl(meth)acrylate monomer polymerized in the presence of the elastomeric phase is methyl methacrylate.

35. The composition of claim 29, wherein the additional thermoplastic resin is present in the composition in a range of between about 1 wt.% and about 80 wt.%, based on the weight of the entire composition.

36. The composition of claim 28 or 29, further comprising at least one additive selected from the group consisting of colorants, dyes, pigments, lubricants, stabilizers, mold release agents, fillers and mixtures thereof.

37. An article comprising the composition of claim 1, claim 28 or claim 29.

## Patentansprüche

1. Zusammensetzung, enthaltend (i) mindestens ein Polycarbonat; (ii) gegebenenfalls mindestens ein von Polycarbonat verschiedenes, zusätzliches thermoplastisches Harz; und (iii) mindestens ein Harz vom Acrylnitril/Styrol/Acrylat-Typ (ASA-Typ), enthaltend eine diskontinuierliche elastomere Phase, dispergiert in einer starren thermoplastischen Phase, wobei mindestens ein Teil der starren thermoplastischen Phase an bzw. auf die elastomere Phase gepfropft ist und
wobei die elastomere Phase ein Polymer umfaßt, welches strukturelle Einheiten aufweist, die sich von mindestens einem (C₁-C₁₂)-Alkyl(meth)acrylatmonomer ableiten, und wobei die starre thermoplastische Phase strukturelle Einheiten umfaßt, welche sich von mindestens einem vinylaromatischen Monomer, mindestens einem einfach ethylenisch ungesättigten Nitrilmonomer und mindestens einem Monomer, ausgewählt aus der Gruppe von (C₁-C₁₂)-Alkyl- und Aryl(meth)acrylatmonomeren ableiten, umfaßt und wobei das Harz vom ASA-Typ gemäß einer Methode hergestellt ist, welche die folgenden Verfahrensschritte umfaßt:
(a) eine Polymerisation einer Mischung von Monomeren in einem ersten Schritt in Gegenwart einer elastomeren Phase, wobei mindestens ein Monomer ausgewählt ist aus der Gruppe von vinylaromatischen Monomeren, mindestens ein Monomer ausgewählt ist aus der Gruppe von einfach ethylenisch ungesättigten Nitrilmonomeren und gegebenenfalls mindestens ein Monomer ausgewählt ist aus der Gruppe von (C₁-C₁₂)-Alkyl(meth)acrylatmonomeren, gefolgt von
(b) einer Polymerisation eines oder mehrerer Monomere in mindestens einem nachfolgenden Schritt in Gegenwart der elastomeren Phase aus (a), wobei ein oder mehrere Monomere mindestens ein Monomer aus der Gruppe von vinylaromatischen Monomeren, mindestens ein Monomer aus der Gruppe von einfach ethylenisch ungesättigten Nitrilmonomeren und gegebenenfalls mindestens ein Monomer aus der Gruppe von (C₁-C₁₂)-Alkyl(meth)acrylatmonomeren umfassen;
wobei das Monomer aus der Gruppe von (C₁-C₁₂)-Alkyl(meth)acrylatmonomeren in mindestens einem der Schritte (a) und (b) vorhanden ist.

2. Zusammensetzung nach Anspruch 1, wobei das Polycarbonat strukturelle Einheiten aufweist, welche sich von mindestens einem dihydroxyaromatischen Kohlenwasserstoff ableiten, dargestellt durch die Formel (I):
HO---D---OH (I)
wobei D ein zweiwertiger aromatischer Rest mit der Struktur der Formel (II) ist: 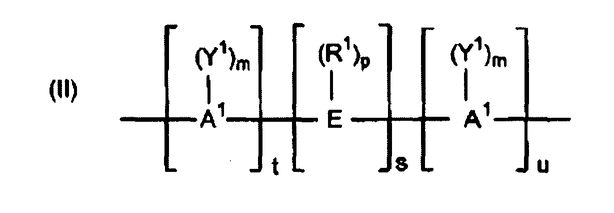 wobei A¹ ausgewählt ist aus der Gruppe von einer aromatischen Gruppe, Phenylen, Biphenylen und Naphthylen;
E ausgewählt ist aus der Gruppe von Alkylen, Alkyliden, Methylen, Ethylen, Ethyliden, Propylen, Propyliden, Isopropyliden, Butylen, Butyliden, Isobutyliden, Amylen, Amyliden, Isoamyliden, einer cycloaliphatischen Gruppe, Cyclopentyliden, Cyclohexyliden, 3,3,5-Trimethylcyclohexyliden, Methylcyclohexyliden, 2-[2.2.1]-Bicycloheptyliden, Neopentyliden, Cyclopentadecyliden, Cyclododecyliden, Adamantyliden; einer schwefelhaltigen Bindung bzw. Bindungsstelle, Sulfid, Sulfoxid, Sulfon, einer phosphorhaltigen Bindung bzw. Bindungsstelle, Phosphinyl, Phosphonyl; einer Etherbindung bzw. -bindungsstelle; einer Carbonylgruppe; einer tertiären Stickstoffgruppe; einer siliciumhaltigen Bindung bzw. Bindungsstelle, Silan, Siloxy; und zwei oder mehreren Alkylen- oder Alkylidengruppen, welche mit einer Einheit verbunden sind, die von Alkylen oder Alkyliden verschieden ist und ausgewählt ist aus der Gruppe aus einer aromatischen Bindung bzw. Bindungsstelle; einer tertiären Stickstoffbindung bzw. -bindungsstelle; einer Etherbindung bzw. -bindungsstelle; einer Carbonylbindung bzw. -bindungsstelle; einer siliziumhaltigen Bindung bzw. Bindungsstelle, Silan, Siloxy; einer schwefelhaltigen Bindung bzw. Bindungsstelle, Sulfid, Sulfoxid, Sulfon; einer phosphorhaltigen Bindung bzw. Bindungsstelle, Phosphinyl und Phosphonyl;
R¹, unabhängig voneinander, ausgewählt aus der Gruppe aus einer einwertigen Kohlenwasserstoffgruppe, Alkenyl, Allyl, Alkyl, Aryl, Aralkyl, Alkaryl, Cycloalkyl, einer halogensubstituierten einwertigen Kohlenwasserstoffgruppe, einer fluorsubstituierten einwertigen Kohlenwasserstoffgruppe, einer chlorsubstituierten einwertigen Kohlenwasserstoffgruppe, Dichloralkyliden und gem-Dichloralkyliden;
Y¹, unabhängig voneinander, ausgewählt ist aus der Gruppe von einem anorganischen Atom, Halogen, Fluor, Brom, Chlor, Iod; einer anorganischen Gruppe mit mehr als einem anorganischen Atom, Nitro; einer organischen Gruppe, einer einwertigen Kohlenwasserstoffgruppe, Alkenyl, Allyl, Alkyl, C₁-C₆-Alkyl, Aryl, Aralkyl, Alkaryl, Cycloalkyl und einer Oxygruppe OR², wobei R² eine einwertige Kohlenwasserstoffgruppe ist, ausgewählt aus der Gruppe von Alkyl, Aryl, Aralkyl, Alkaryl und Cycloalkyl;
"m" eine ganze Zahl von und einschließlich Null bis zur Anzahl an ersetzbaren, für die Substitution verfügbaren Wasserstoffen an A¹ ist;
"p" eine ganze Zahl von und einschließlich Null bis zur Anzahl an ersetzbaren, für die Substitution verfügbaren Wasserstoffen an E ist;
"t" eine ganze Zahl gleich mindestens eins ist;
"s" eine ganze Zahl gleich entweder Null oder eins ist; und
"u" eine ganze Zahl einschließlich Null darstellt.

3. Zusammensetzung nach Anspruch 1, wobei das Polycarbonat strukturelle Einheiten aufweist, die sich von mindestens einem dihydroxyaromatischen Kohlenwasserstoff ableiten, ausgewählt aus der Gruppe von Bis(4-hydroxyphenyl)sulfid, Bis(4-hydroxyphenyl)ether, Bis(4-hydroxyphenyl)sulfon, Bis(4-hydroxyphenyl)sulfoxid, 1,4-Dihydroxybenzol, 4,4'-Oxydiphenol, 2,2-Bis(4-hydroxyphenyl)hexafluropropan, 4,4'-(3,3,5-Trimethylcyclohexyliden)diphenol; 4,4'-Bis(3,5-dimethyl)diphenol, 1,1-Bis(4-hydroxy-3-methylphenyl)cyclohexan; 4,4-Bis(4-hydroxyphenyl)heptan; 2,4'-Dihydroxydiphenylmethan; Bis(2-hydroxyphenyl)methan; Bis(4-hydroxyphenyl)methan; Bis(4-hydroxy-5-nitrophenyl)methan; Bis(4-hydroxy-2,6-dimethyl-3-methoxyphenyl)methan; 1,1-Bis(4-hydroxyphenyl)ethan; 1,2-Bis(4-hydroxyphenyl)ethan; 1,1-Bis(4-hydroxy-2-chlorphenyl)ethan; 2,2-Bis(3-phenyl-4-hydroxyphenyl)propan; 2,2-Bis(4-hydroxy-3-methylphenyl)propan; 2,2-Bis(4-hydroxy-3-ethylphenyl)propan; 2,2-Bis(4-hydroxy-3-isopropylphenyl)propan; 2,2-Bis(4-hydroxy-3,5-dimethylphenyl)propan; 3,5,3',5'-Tetrachlor-4,4'-dihydroxyphenyl)propan; Bis(4-hydroxyphenyl)cyclohexylmethan; 2,2-Bis(4-hydroxyphenyl)-1-phenylpropan; 2,4'-Dihydroxyphenylsulfon; Dihydroxynaphthalin; 2,6-Dihydroxynaphthalin; Hydrochinon; Resorcin; C₁₋₃-alkylsubstituierten Resorcinen; Methylresorcinen, Catechol, 1,4-Dihydroxy-3-methylbenzol; 2,2-Bis(4-hydroxyphenyl)butan; 2,2-Bis(4-hydroxyphenyl)-2-methylbutan; 1,1-Bis(4-hydroxyphenyl)cyclohexan; 4,4'-Dihydroxydiphenyl; 2-(3-Methyl-4-hydroxyphenyl-2-(4-hydroxyphenyl)-propan; 2-(3,5-Dimethyl-4-hydroxyphenyl)-2-(4-hydroxyphenyl)propan; 2-(3-Methyl-4-hydroxyphenyl)-2-(3,5-dimethyl-4-hydroxyphenyl)propan; Bis(3,5-dimethylphenyl-4-hydroxyphenyl)methan; 1,1-Bis(3,5-dimethylphenyl-4-hydroxyphenyl)ethan; 2,2-Bis(3,5-dimethylphenyl-4-hydroxyphenyl)propan; 2,4-Bis(3,5-dimethylphenyl-4-hydroxyphenyl)-2-methylbutan; 3,3-Bis(3,5-dimethylphenyl-4-hydroxyphenyl)pentan; 1,1-Bis(3,5-dimethylphenyl-4-hydroxyphenyl)cyclopentan; 1, 1 -Bis(3,5-dimethylphenyl-4-hydroxyphenyl)cyclohexan; Bis(3,5-dimethyl-4-hydroxyphenyl)sulfoxid; Bis(3,5-dimethyl-4-hydroxyphenyl)sulfon, Bis(3,5-dimethylphenyl-4-hydroxyphenyl)sulfid; 3-(4-Hydroxyphenyl)-1,1,3-trimethylindan-5-ol; 1-(4-Hydroxyphenyl)-1,3,3-trimethylindan-5-ol; 2,2,2',2'-Tetrahydro-3,3,3',3'-tetramethyl-1,1'-spirobi[1H-inden]-6,6'-diol und Mischungen, welche mindestens eine der vorgenannten dihydroxyaromatischen Verbindungen enthalten.

4. Zusammensetzung nach Anspruch 1, wobei das Polycarbonat strukturelle Einheiten aufweist, welche sich von mindestens einem dihydroxyaromatischen Kohlenwasserstoff ableiten, dargestellt durch die Formel: 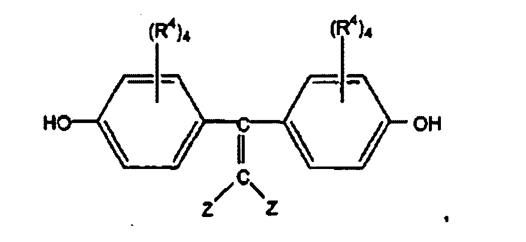 wobei R⁴, unabhängig voneinander, Wasserstoff, Chlor, Brom oder eine einwertige C₁₋₃₀-Kohlenwasserstoff- oder Hydroxycarbonoxygruppe darstellt und jedes Z ein Wasserstoff, Chlor oder Brom ist, jedoch mit der Maßgabe, daß mindestens ein Z Chlor oder Brom ist.

5. Zusammensetzung nach Anspruch 1, wobei das Polycarbonat strukturelle Einheiten aufweist, welche sich von mindestens einem dihydroxyaromatischen Kohlenwasserstoff ableiten, dargestellt durch die Formel: 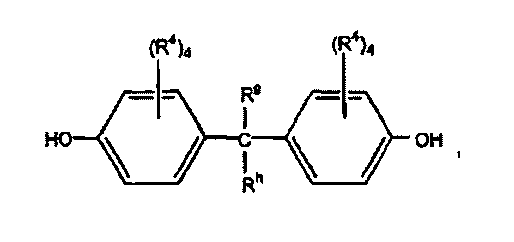 wobei R⁴, unabhängig voneinander, Wasserstoff, Chlor, Brom oder eine einwertige C₁₋₃₀-Kohlenwasserstoff- oder Hydroxycarbonoxygruppe darstellt und R^{g} und R^{h}, unabhängig voneinander, Wasserstoff oder eine C₁₋₃₀-Kohlenwasserstoffgruppe darstellen.

6. Zusammensetzung nach Anspruch 5, wobei der dihydroxyaromatische Kohlenwasserstoff Bisphenol A umfaßt.

7. Zusammensetzung nach Anspruch 1, wobei das Polycarbonat ein gewichtsmittleres Molekulargewicht im Bereich von etwa 18.000 g/mol bis etwa 40.000 g/mol, bestimmt gegenüber Polystyrolstandards, aufweist.

8. Zusammensetzung nach Anspruch 1, wobei das Polycarbonat eine Mischung von mindestens zwei Polycarbonaten verschiedenen gewichtsmittleren Molekulargewichts umfaßt.

9. Zusammensetzung nach Anspruch 8, wobei die Mischung ein Polycarbonat mit einem gewichtsmittleren Molekulargewicht zwischen etwa 18.000 g/mol und etwa 23.000 g/mol in Kombination mit einem Polycarbonat mit einem gewichtsmittleren Molekulargewicht zwischen etwa 28.000 g/mol und etwa 36.000 g/mol, bestimmt gegenüber Polystyrolstandards, umfaßt.

10. Zusammensetzung nach Anspruch 1, wobei das Polycarbonat in einer Menge im Bereich von etwa 5 Gew.-% und etwa 95 Gew.-%, bezogen auf das Gewicht der gesamten Zusammensetzung, vorhanden ist.

11. Zusammensetzung nach Anspruch 1, wobei das zusätzliche thermoplastische Harz ausgewählt ist aus der Gruppe von (Meth)Acrylathomopolymeren und -copolymeren, Methylmethacrylat/Butylacrylat-Copolymeren, Methylmethacrylat/Ethylacrylat-Copolymeren, Styrol- und Alkylstyrolhomopolymeren und- copolymeren, Styrolacrylnitrilcopolymeren (SAN), alpha-Methylstyrol/Acrylnitril-Copolymeren (AMSAN), Methylmethacrylat/Styrol/Acrylnitril-Terpolymer (MMA-SAN), Methylmethacrylat/alpha-Methylstyrol/Acrylnitril-Terpolymer (MMA-AMSAN) und Mischungen hiervon.

12. Zusammensetzung nach Anspruch 11, wobei das zusätzliche thermoplastische Harz in der Zusammensetzung im Bereich zwischen etwa 1 Gew.-% und etwa 80 Gew.-%, bezogen auf das Gewicht der gesamten Zusammensetzung, vorhanden ist.

13. Zusammensetzung nach Anspruch 1, wobei das Alkyl(meth)acrylatmonomer Butylacrylat ist.

14. Zusammensetzung nach Anspruch 1, wobei die elastomere Phase weiterhin strukturelle Einheiten umfaßt, welche sich von mindestens einem polyethylenisch ungesättigten Monomer ableitet.

15. Zusammensetzung nach Anspruch 14, wobei das polyethylenisch ungesättigte Monomer ausgewählt ist aus der Gruppe von Butylendiacrylat, Divinylbenzol, Butendioldimethacrylat, Trimethylolpropantri(meth)acrylat, Allylmethacrylat, Diallylmethacrylat, Diallylmaleat, Diallylfumarat, Diallylphthalat, Triallylmethacrylat, Triallylisocyanurat, Triallylcyanurat, Tricyclodecenylalkoholacrylat und Mischungen hiervon.

16. Zusammensetzung nach Anspruch 1, wobei die elastomere Phase etwa 10 Gew.-% bis etwa 80 Gew.-% Harz vom ASA-Typ umfaßt.

17. Zusammensetzung nach Anspruch 1, wobei die elastomere Phase etwa 35 Gew.-% bis etwa 80 Gew.-% Harz vom ASA-Typ umfaßt.

18. Zusammensetzung nach Anspruch 1, wobei die elastomere Phase anfänglich Teilchen umfaßt, welche ausgewählt sind aus der Gruppe einer Mischung von Teilchengrößen mit mindestens zwei zahlenmittleren Gewichtsgrößenverteilungen und einer Teilchengrößenverteilung mit Teilchen in der Größenordnung von etwa 50 nm bis etwa 1.000 nm.

19. Zusammensetzung nach Anspruch 18, wobei die zwei zahlenmittleren Teilchengrößenverteilungen jeweils in einem Bereich zwischen etwa 80 nm und etwa 500 nm liegen.

20. Zusammensetzung nach Anspruch 1, wobei mindestens etwa 5 Gew.-% bis etwa 90 Gew.-% der starren thermoplastischen Phase, bezogen auf das Gesamtgewicht der starren thermoplastischen Phase in der Zusammensetzung, chemisch gepfropft an bzw. auf die elastomere Phase vorliegen.

21. Zusammensetzung nach Anspruch 1, wobei die starre thermoplastische Phase strukturelle Einheiten umfaßt, welche sich von Styrol, Acrylnitril und Methylmethacrylat; oder alpha-Methylstryrol, Acrylnitril und Methylmethacrylat; oder Styrol, alpha-Methylstyrol, Acrylnitril und Methylmethacrylat ableiten.

22. Zusammensetzung nach Anspruch 21, wobei das gewichtsbezogene Verhältnis von Styrol, alpha-Methylstyrol und Mischungen hiervon zu Acrylnitril in einer Größenordnung zwischen etwa 1,5:1 und etwa 4:1 liegt.

23. Zusammensetzung nach Anspruch 21, wobei das gewichtsbezogene Verhältnis von Styrol, alpha-Methylstyrol oder deren Mischungen zu Acrylnitril in einem Bereich zwischen etwa 2:1 und etwa 3:1 liegt.

24. Zusammensetzung nach Anspruch 21, wobei das gewichtsbezogene Verhältnis von Styrol, alpha-Methylstyrol und deren Mischungen zu Acrylnitril etwa 2,6:1 beträgt.

25. Zusammensetzung nach Anspruch 21, wobei das gewichtsbezogene Verhältnis von Methylmethacrylat zu der Gesamtmenge an vinylaromatischem Monomer und einfach ethylenisch ungesättigtem Nitrilmonomer im Bereich zwischen etwa 4:1 und etwa 1:4 liegt.

26. Zusammensetzung nach Anspruch 1, wobei die Menge an (C₁-C₁₂)-Alkyl- oder Aryl(meth)acrylatmonomer, welches zur Pfropfung des Kautschuksubstrats eingesetzt wird, in einem Bereich zwischen etwa 70 Gew.-% und etwa 2 Gew.-%, bezogen auf die Gesamtmenge aller für die Pfropfung eingesetzter Monomere, beträgt.

27. Zusammensetzung nach Anspruch 1, weiterhin umfassend mindestens ein Additiv aus der Gruppe von Färbemitteln, Farbstoffen, Pigmenten, Schmiermitteln, Stabilisatoren, Entformungsmitteln, Füllstoffen und deren Mischungen.

28. Zusammensetzung nach Anspruch 1, enthaltend (i) zwischen etwa 5 Gew.-% und etwa 95 Gew.-%, bezogen auf das Gewicht der gesamten Zusammensetzung, mindestens eines Polycarbonats mit strukturellen Einheiten, welche sich von Bisphenol A ableiten; (ii) zwischen etwa 1 Gew.-% und etwa 80 Gew.-%, bezogen auf das Gewicht der gesamten Mischung, mindestens eines von Polycarbonat verschiedenen zusätzlichen thermoplastischen Harzes, ausgewählt aus der Gruppe von (Meth)Acrylathomopolymeren und -copolymeren, Methylmethacrylat/Butylacrylatcopolymer, Methylmethacrylat/Ethylacrylat-Copolymeren, Styrol- und Alkylstyrolhomopolymeren und -Copolymeren, Styrol/Acrylnitril-Copolymeren (SAN), alpha-Methylstyrol/Acrylnitril-Copolymeren (AMSAN), Methylmethacrylat/Styrol/Acrylnitril-Terpolymeren (MMA-SAN), Methylmethacrylat/alpha-Methylstyrol/Acrylnitril-Terpolymeren (MMA-AMSAN) und Mischungen hiervon; und (iii) mindestens ein Harz vom Typ Acrylnitril/Styrol/Acrylat (ASA), enthaltend eine diskontinuierliche elastomere Phase, dispergiert in einer starren thermoplastischen Phase, wobei mindestens ein Teil der starren thermoplastischen Phase an bzw. auf die elastomere Phase gepfropft ist, und
wobei die elastomere Phase strukturelle Einheiten umfaßt, welche sich von Butylacrylat ableiten; die starre thermoplastische Phase strukturelle Einheiten umfaßt, welche sich von Styrol, Acrylnitril und Methylmethacrylat ableiten; oder von alpha-Methylstryol, Acrylnitril und Methylmethacrylat ableiten; oder von Styrol, alpha-Methylstyrol, Acrylnitril und Methylmethacrylat ableiten; und
wobei das gewichtsbezogene Verhältnis von Styrol, alpha-Methylstyrol und deren Mischungen zu Acrylnitril in einem Bereich von etwa 1,5:1 und etwa 4:1 liegt und das gewichtsbezogene Verhältnis von Methylmethacrylat zur Gesamtheit anderer Monomerer in einem Bereich zwischen etwa 4:1 und etwa 1:4 liegt.

29. Zusammensetzung nach Anspruch 1, enthaltend (i) mindestens ein Polycarbonat mit strukturellen Einheiten, welche sich von Bisphenol A ableiten; (ii) mindestens ein zu Polycarbonat verschiedenes, zusätzliches thermoplastisches Harz aus der Gruppe von (Meth)Acrylathomopolymeren- und Copolymeren, Methylmethacrylat/Butylacrylat-Copolymeren, Methylacrylat/Ethylacrylat-Copolymeren, Styrol- und Alkylstyrolhomopolymeren- und copolymeren, Styrol/Acrylnitril-Copolymeren (SAN), alpha-Methylstyrol/-Acrylnitril-Copolymeren (AMSAN), Methylmethacrylat/Styrol/Acrylnitril-Terpolymeren (MMA-SAN), Methylmethacrylat/alpha-Methylstyrol/Acrylnitril-Terpolymeren (MMA-AMSAN) und deren Mischungen; und (iii) mindestens ein Harz vom Typ Acrylnitril/Styrol/Acrylat (ASA), enthaltend eine diskontinuierliche elastomere Phase, dispergiert in einer starren thermoplastischen Phase, wobei mindestens ein Teil der starren thermoplastischen Phase an bzw. auf die elastomere Phase gepfropft ist und wobei die elastomere Phase ein Polymer umfaßt, welches strukturelle Einheiten enthält, die sich von mindestens einem (C₁-C₁₂)-Alkyl(meth)acrylatmonomer ableiten.

30. Zusammensetzung nach Anspruch 29, wobei das Polycarbonat in einem Bereich zwischen etwa 5 Gew.-% und etwa 95 Gew.-%, bezogen auf das Gewicht der gesamten Zusammensetzung, vorhanden ist.

31. Zusammensetzung nach Anspruch 29, wobei das Alkyl(meth)acrylatmonomer der elastomeren Phase Butylacrylat umfaßt.

32. Zusammensetzung nach Anspruch 29, wobei das in Gegenwart der elastomeren Phase polymerisierte Alkyl(meth)acrylatmonomer in Schritt (b) vorhanden ist.

33. Zusammensetzung nach Anspruch 29, wobei die Menge an für die Pfropfung an das Kautschuksubstrat verwendetem Alkyl(meth)acrylatmonomer im Bereich zwischen etwa 70 Gew.-% und etwa 2 Gew.-%, bezogen auf das Gesamtgewicht aller für die Pfropfung eingesetzter Monomere, beträgt.

34. Zusammensetzung nach Anspruch 29, wobei das in Gegenwart der elastomeren Phase polymerisierte Akyl(meth)acrylatmonomer Methylmethacrylat ist.

35. Zusammensetzung nach Anspruch 29, wobei das zusätzliche thermoplastische Harz in der Zusammensetzung in einem Bereich zwischen etwa 1 Gew.-% und etwa 80 Gew.-%, bezogen auf das Gewicht der gesamten Zusammensetzung, vorhanden ist.

36. Zusammensetzung nach Anspruch 28 oder 29, weiterhin enthaltend mindestens ein Additiv, ausgewählt aus der Gruppe von Färbemitteln, Farbstoffen, Pigmenten, Schmiermitteln, Stabilisatoren, Entformungsmitteln, Füllstoffen und deren Mischungen.

37. Gegenstand, aufweisend die Zusammensetzung nach Anspruch 1, Anspruch 28 oder Anspruch 29.

## Revendications

1. Formule comprenant (i) au moins un polycarbonate; (ii) éventuellement au moins une résine thermoplastique supplémentaire différente d'un polycarbonate; et (iii) au moins une résine de type acrylonitrile-styrène-acrylate (ASA) comprenant une phase élastomère discontinue dispersée dans une phase thermoplastique rigide, au moins une portion de la phase thermoplastique rigide étant greffée à la phase élastomère, et la phase élastomère comprenant un polymère dont les motifs structuraux sont dérivés d'au moins un monomère de type acrylate ou méthacrylate d'alkyle en C₁-C₁₂, et la phase thermoplastique rigide comprenant des motifs structuraux dérivés d'au moins un monomère vinylaromatique, d'au moins un monomère nitrile portant une unique insaturation éthylénique, et d'au moins un monomère sélectionné au sein du groupe constitué par les monomères acrylate ou méthacrylate d'alkyle en C₁-C₁₂ et d'aryle, et la résine de type ASA étant synthétisée par une méthode comprenant les étapes suivantes:
a) polymérisation d'un mélange de monomères dans une première étape en présence de la phase élastomère, au moins un monomère étant sélectionné au sein du groupe constitué par les monomères vinylaromatiques, au moins un monomère étant sélectionné au sein du groupe constitué par les monomères nitrile portant une unique insaturation éthylénique, et éventuellement au moins un monomère étant sélectionné au sein du groupe constitué par les monomères acrylate ou méthacrylate d'alkyle en C₁-C₁₂, puis
b) polymérisation d'un ou de plusieurs monomères dans au moins une étape subséquente en présence de la phase élastomère obtenue en (a), le
ou les monomères comprenant au moins un monomère sélectionné au sein du groupe constitué par les monomères vinylaromatiques, au moins un monomère sélectionné au sein du groupe constitué par les monomères nitrile portant une unique insaturation éthylénique, et éventuellement au moins un monomère sélectionné au sein du groupe constitué par les monomères acrylate ou méthacrylate d'alkyle en C₁-C₁₂;
le monomère sélectionné au sein du groupe constitué par les monomères acrylate ou méthacrylate d'alkyle en C₁-C₁₂ et d'aryle étant présent dans moins l'une des étapes (a) et (b).

2. Formule selon la revendication 1 où le polycarbonate comprend des motifs structuraux dérivés d'au moins un hydrocarbure dihydroxyaromatique de formule (I) :
(I) HO---D---OH
où D représente un radical aromatique divalent dont la structure est celle de la formule (II) : 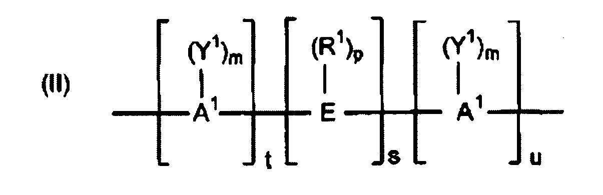 où A¹ est sélectionné au sein du groupe constitué par un groupement aromatique, un phénylène, un biphénylène et un naphtylène;
E est sélectionné au sein du groupe constitué par les groupements alkylène, alkylidène, méthylène, éthylène, éthylidène, propylène, propylidène, isopropylidène, butylène, butylidène, isobutylidène, amylène, amylidène, isoamylidène, cycloaliphatiques, cyclopentylidène, cyclohexylidène, 3,3,5-triméthylcyclohexylidène, méthylcyclohexylidène, 2-[2.2.1]-bicycloheptylidène, néopentylidène, cyclopentadécylidène, cyclododécylidène, adamantylidène; pont sulfure, sulfure, sulfoxyde, sulfone; pont phosphore, phosphinyle, phosphonyle; pont éther; carbonyle; azote tertiaire; pont silicium, silane, siloxy; et deux groupements alkylène ou alkylidène ou plus connectées par un groupement différent d'un alkylène ou d'un alkylidène et sélectionné au sein du groupe constitué par les ponts aromatiques; les ponts azote tertiaire; les ponts éther; les ponts carbonyle; les ponts silicium, les silanes, les siloxy; les ponts sulfure, les sulfures, les sulfoxydes, les sulfones; les ponts phosphore, les phosphinyles et les phosphonyles;
les groupements R¹ sont sélectionnés indépendamment les uns les autres au sein du groupe constitué par les groupements hydrocarbure monovalents, alcényle, allyle, alkyle, aryle, arylalkyle, alkylaryle, cycloalkyle, hydrocarbure monovalents halogénés, hydrocarbure monovalents fluorés, hydrocarbure monovalents chlorés, dichloroalkylidène et gem-dichloroalkylidène,
les groupements Y¹ sont sélectionnés indépendamment les uns des autres au sein du groupe constitué par les atomes inorganiques, les halogènes, le fluor, le brome, le chlore, l'iode; les groupements inorganiques contenant plus d'un atome inorganique, les groupements nitro; les groupements organiques, les groupements hydrocarbure monovalent, alcényle, allyle, alkyle, alkyle en C₁-C₆, aryle, arylalkyle, alkylaryle, cycloalkyle, oxy, OR² où R² représente un groupement hydrocarbure monovalent sélectionné au sein du groupe constitué par les groupements alkyle, aryle, arylalkyle, alkylaryle, cycloalkyle;
"m" représente tout entier compris entre zéro inclus et le nombre d'hydrogènes remplaçables et pouvant être substitués sur A¹;
"p" représente un entier compris entre zéro inclus et le nombre d'hydrogènes remplaçables et pouvant être substitués sur E;
"t" représente un entier au moins égal à un;
"s" représente un entier égal à zéro ou à un; et
"u" représente un entier quelconque, zéro inclus.

3. Formule selon la revendication 1 où le polycarbonate comprend des motifs structuraux dérivés d'au moins un hydrocarbure dihydroxyaromatique sélectionné au sein du groupe constitué par les composés suivants : bis(4-hydroxyphényl)sulfure, bis(4-hydroxyphényl)éther, bis(4-hydroxyphényl)sulfone, bis(4-hydroxyphényl)sulfoxyde, 1,4-dihydroxybenzène, 4,4'-oxydiphénol, 2,2-bis(4-hydroxyphényl)hexafluoropropane, 4,4'-(3,3,5-triméthylcyclohexylidène)diphénol; 4,4'-bis(3,5-diméthyl)diphénol, 1,1-bis(4-hydroxy-3-méthylphényl)cyclohexane; 4,4-bis(4-hydroxyphényl)heptane; 2,4'-dihydroxydiphénylméthane; bis-(2-hydroxyphényl)méthane; bis(4-hydroxyphényl)méthane; bis(4-hydroxy-5-nitrophényl)méthane; bis(4-hydroxy-2,6-diméthyl-3-méthoxyphényl)méthane; 1,1-bis(4-hydroxyphényl)éthane; 1,2-bis(4-hydroxyphényl)éthane; 1,1-bis(4-hydroxy-2-chlorophényl)éthane; 2,2-bis(3-phényl-4-hydroxyphényl)propane; 2,2-bis(4-hydroxy-3-méthylphényl)propane; 2,2-bis(4-hydroxy-3-éthylphényl)propane; 2,2-bis(4-hydroxy-3-isopropylphényl)propane; 2,2-bis(4-hydroxy-3,5-diméthylphényl)propane; 3,5,3',5'-tétrachloro-4,4'-dihydroxyphényl)propane; bis(4-hydroxyphényl)cyclohexylméthane; 2,2-bis(4-hydroxyphényl)-1-phénylpropane; 2,4'-dihydroxyphénylsulfone; dihydroxynaphtalène; 2,6-dihydroxynaphtalène; hydroquinone; résorcinol; résorcinols substitués par des groupements alkyle en C_{1-3;} méthylrésorcinol, catéchol, 1,4-dihydroxy-3-méthylbenzène; 2,2-bis(4-hydroxyphényl)butane; 2,2-bis(4-hydroxyphényl)-2-méthylbutane; 1,1-bis(4-hydroxyphényl)cyclohexane; 4,4'-dihydroxydiphényle; 2-(3-méthyl-4-hydroxyphényl-2-(4-hydroxyphényl)propane; 2-(3,5-diméthyl-4-hydroxyphényl)-2-(4-hydroxyphényl)propane; 2-(3-méthyl-4-hydroxyphényl)-2-(3,5-diméthyl-4-hydroxyphényl)propane; bis(3,5-diméthylphényl-4-hydroxyphényl)méthane; 1,1-bis(3,5-diméthylphényl-4-hydroxyphényl)éthane; 2,2-bis(3,5-diméthylphényl-4-hydroxyphényl)propane; 2,4-bis(3,5-diméthylphényl-4-hydroxyphényl)-2-méthylbutane; 3,3-bis(3,5-diméthylphényl-4-hydroxyphényl)pentane; 1,1-bis(3,5-diméthylphényl-4-hydroxyphényl)cyclopentane; 1,1-bis(3,5-diméthylphényl-4-hydroxyphényl)cyclohexane; bis(3,5-diméthyl-4-hydroxyphényl)sulfoxyde, bis(3,5-diméthyl-4-hydroxyphényl)sulfone, bis(3,5-diméthylphényl-4-hydroxyphényl)sulfure; 3-(4-hydroxyphényl)-1,1,3-triméthylindan-5-ol; 1-(4-hydroxyphényl)-1,3,3-triméthylindan-5-ol; 2,2,2',2'-tétrahydro-3,3,3',3'-tétraméthyl-1,1'-spirobi[1H-indène]-6,6'-diol et les mélanges comprenant au moins l'un des composés dihydroxyaromatiques précédents.

4. Formule selon la revendication 1 où le polycarbonate comprend des motifs structuraux dérivés d'au moins un hydrocarbure dihydroxyaromatique de formule : 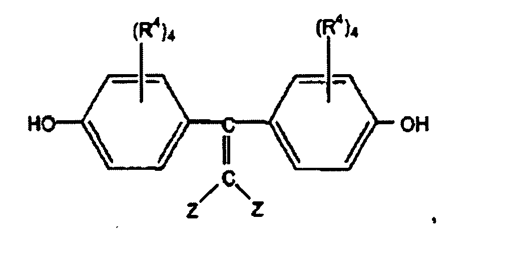 où les groupements R⁴ représentent indépendamment les uns des autres des atomes d'hydrogène, de chlore, de brome ou des groupements hydrocarbure ou hydrocarbonoxy monovalents en C₁₋₃₀, les groupements Z représentent indépendamment les uns des autres des atomes d'hydrogène, de chlore, de brome, à la condition qu'au moins un Z représente un atome de chlore ou de brome.

5. Formule selon la revendication 1 où le polycarbonate comprend des motifs structuraux dérivés d'au moins un hydrocarbure dihydroxyaromatique de formule : 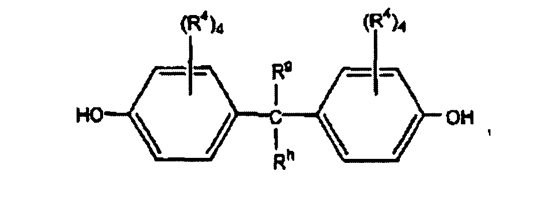 où les groupements R⁴ représentent indépendamment les uns des autres des atomes d'hydrogène, de chlore, de brome ou des groupements hydrocarbure ou hydrocarbonoxy monovalents en C₁₋₃₀, et les groupements R^{g} et R^{h} représentent indépendamment les uns des autres un atome d'hydrogène ou un groupement hydrocarbure en C₁₋₃₀.

6. Formule selon la revendication 5 où l'hydrocarbure dihydroxyaromatique comprend du bisphénol A.

7. Formule selon la revendication 1 où le polycarbonate présente une masse moléculaire moyenne en poids comprise entre environ 18 000 et environ 40 000 g/mol, comme déterminé par comparaison avec des étalons de polystyrène.

8. Formule selon la revendication 1 où le polycarbonate comprend un mélange d'au moins deux polycarbonates de masses moléculaires moyennes en poids différentes.

9. Formule selon la revendication 8 où le mélange comprend un polycarbonate de masse moléculaire moyenne en poids comprise entre environ 18 000 et environ 23 000 g/mol en combinaison avec un polycarbonate de masse moléculaire moyenne en poids comprise entre environ 28 000 et environ 36 000 g/mol, par rapport à des étalons de polystyrène.

10. Formule selon la revendication 1 où le polycarbonate est présent à une teneur comprise entre environ 5 % en masse et environ 95 % en masse, par rapport à la masse de la formule tout entière.

11. Formule selon la revendication 1, où la résine thermoplastique supplémentaire est sélectionnée au sein du groupe constitué par les homopolymères et les copolymères d'acrylate et de méthacrylate, les copolymères méthacrylate de méthyle-acrylate de butyle, les copolymères méthacrylate de méthyle-acrylate d'éthyle, les homopolymères et les copolymères de styrène et d'alkylstyrène, les copolymères styrène-acrylonitrile (SAN), les copolymères alpha-méthylstyrène-acrylonitrile (AMSAN), les terpolymères méthacrylate de méthyle-styrène-acrylonitrile (MMA-SAN), les terpolymères méthacrylate de méthyle/alpha-méthylstyrène/acrylonitrile (MMA-AMSAN), et leurs mélanges.

12. Formule selon la revendication 11 où la résine thermoplastique supplémentaire est présente dans la formule à une teneur comprise entre environ 1 % en masse et environ 80 % en masse, par rapport à la masse de la formule tout entière.

13. Formule selon la revendication 1, où le monomère d'acrylate ou de méthacrylate d'alkyle est l'acrylate de butyle.

14. Formule selon la revendication 1, où la phase élastomère comprend en outre des motifs structuraux dérivés d'au moins un monomère portant plusieurs insaturations éthyléniques.

15. Formule selon la revendication 14, où le monomère portant plusieurs insaturations éthyléniques est sélectionné au sein du groupe constitué par le diacrylate de butylène, le divinylbenzène, le diméthacrylate de butènediyle, le triacrylate ou triméthacrylate de triméthylolpropane, le méthacrylate d'allyle, le méthacrylate de diallyle, le maléate de diallyle, le fumarate de diallyle, le phtalate de diallyle, le méthacrylate de triallyle, l'isocyanate de triallyle, le cyanate de triallyle, l'acrylate de tricyclodécényle et leurs mélanges.

16. Formule selon la revendication 1, où la phase élastomère comprend entre environ 10 et environ 80 pour cent en masse de la résine de type ASA.

17. Formule selon la revendication 1, où la phase élastomère comprend entre environ 35 et environ 80 pour cent en masse de la résine de type ASA.

18. Formule selon la revendication 1, où la phase élastomère comprend initialement des particules sélectionnées au sein du groupe constitué par un mélange de granulométries comportant au moins deux distributions granulométriques moyennes en nombre et une distribution granulométrique large incluant des particules dont la taille varie entre environ 50 nm et environ 1000 nm.

19. Formule selon la revendication 18, où chacune des deux distributions granulométriques moyennes en nombre est comprise entre environ 80 nm et environ 500 nm.

20. Formule selon la revendication 1, où au moins environ 5 % en masse à environ 90 % en masse de phase thermoplastique rigide sont greffés chimiquement à la phase élastomère, par rapport à la quantité totale de phase thermoplastique rigide de la formule.

21. Formule selon la revendication 1, où la phase thermoplastique rigide comprend des motifs structuraux dérivés du styrène, de l'acrylonitrile et du méthacrylate de méthyle; ou de l'alpha-méthylstyrène, de l'acrylonitrile et du méthacrylate de méthyle; ou du styrène, de l'alpha-méthylstyrène, de l'acrylonitrile et du méthacrylate de méthyle.

22. Formule selon la revendication 21, où le rapport en masse du styrène, de l'alpha-méthylstyrène ou du mélange de ces composés sur l'acrylonitrile est compris entre environ 1,5 : 1 et environ 4 : 1.

23. Formule selon la revendication 21, où le rapport en masse du styrène, de l'alpha-méthylstyrène ou du mélange de ces composés sur l'acrylonitrile est compris entre environ 2 : 1 et environ 3:1.

24. Formule selon la revendication 21, où le rapport en masse du styrène, de l'alpha-méthylstyrène ou du mélange de ces composés sur l'acrylonitrile est d'environ 2,6 : 1.

25. Formule selon la revendication 21, où le rapport en masse du méthacrylate de méthyle sur la somme des quantités de monomère vinylaromatique et de monomère nitrile portant une unique insaturation éthylénique est compris entre environ 4 : 1 et environ 1 : 4.

26. Formule selon la revendication 1, où la teneur en monomère acrylate ou méthacrylate d'alkyle en C₁-C₁₂ et d'aryle employé pour la greffe au substrat caoutchouc est comprise entre environ 70 % en masse et environ 2 % en masse, par rapport à la somme des masses de tous les monomères employés pour la greffe.

27. Formule selon la revendication 1, comprenant en outre au moins un additif sélectionné au sein du groupe constitué par les colorants, les teintes, les pigments, les lubrifiants, les stabilisants, les agents de démoulage, les charges et les mélanges de ces additifs.

28. Formule selon la revendication 1 comprenant (i) entre environ 5 % en masse et environ 95 % en masse, par rapport à la masse de la formule tout entière, d'au moins un polycarbonate comprenant des motifs structuraux dérivés du bisphénol A; (ii) entre environ 1 % en masse et environ 80 % en masse, par rapport à la masse de la formule tout entière, d'au moins une résine thermoplastique supplémentaire différente d'un polycarbonate sélectionnée au sein du groupe constitué par les homopolymères et les copolymères d'acrylate et de méthacrylate, les copolymères méthacrylate de méthyle-acrylate de butyle, les copolymères méthacrylate de méthyle-acrylate d'éthyle, les homopolymères et les copolymères de styrène et d'alkylstyrène, les copolymères styrène-acrylonitrile (SAN), les copolymères alpha-méthylstyrène-acrylonitrile (AMSAN), les terpolymères méthacrylate de méthyle-styrène-acrylonitrile (MMA-SAN), les terpolymères méthacrylate de méthyle/alpha-méthylstyrène/acrylonitrile (MMA-AMSAN), et leurs mélanges; et (iii) au moins une résine de type acrylonitrile-styrène-acrylate (ASA) comprenant une phase élastomère discontinue dispersée dans une phase thermoplastique rigide, une portion au moins de la phase thermoplastique rigide étant greffée à la phase élastomère, et
où la phase élastomère comprend des motifs structuraux dérivés de l'acrylate de butyle; la phase thermoplastique rigide comprend des motifs structuraux dérivés du styrène, de l'acrylonitrile et du méthacrylate de méthyle; ou de l'alpha-méthylstyrène, de l'acrylonitrile et du méthacrylate de méthyle; ou du styrène, de l'alpha-méthylstyrène, de l'acrylonitrile et du méthacrylate de méthyle; et
où le rapport en masse du styrène, de l'alpha-méthylstyrène ou du mélange de ces substances sur l'acrylonitrile est compris entre environ 1,5 : 1 et environ 4 : 1; et le rapport en masse du méthacrylate de méthyle sur la somme des quantités des autres monomères est compris entre environ 4 : 1 et environ 1 : 4.

29. Formule selon la revendication 1 comprenant (i) au moins un polycarbonate comprenant des motifs structuraux dérivés du bisphénol A; (ii) au moins une résine thermoplastique supplémentaire différente d'un polycarbonate sélectionnée au sein du groupe constitué par les homopolymères et les copolymères d'acrylate et de méthacrylate, les copolymères méthacrylate de méthyle-acrylate de butyle, les copolymères méthacrylate de méthyle-acrylate d'éthyle, les homopolymères et les copolymères de styrène et d'alkylstyrène, les copolymères styrène-acrylonitrile (SAN), les copolymères alpha-méthylstyrène-acrylonitrile (AMSAN), les terpolymères méthacrylate de méthyle-styrène-acrylonitrile (MMA-SAN), les terpolymères méthacrylate de méthyle/alpha-méthylstyrène/acrylonitrile (MMA-AMSAN), et leurs mélanges; et (iii) au moins une résine de type acrylonitrile-styrène-acrylate (ASA) comprenant une phase élastomère discontinue dispersée dans une phase thermoplastique rigide, une portion au moins de la phase thermoplastique rigide étant greffée à la phase élastomère, et où la phase élastomère comprend un polymère dont les motifs structuraux sont dérivés d'au moins un monomère acrylate ou méthacrylate d'alkyle en C₁-C₁₂.

30. Formule selon la revendication 29 où le polycarbonate est présent à une teneur comprise entre environ 5 % en masse et environ 95 % en masse, par rapport à la masse de la formule tout entière.

31. Formule selon la revendication 29, où le monomère d'acrylate ou de méthacrylate d'alkyle comprend l'acrylate de butyle.

32. Formule selon la revendication 29, où le monomère d'acrylate ou de méthacrylate d'alkyle polymérisé en présence de la phase élastomère est présent dans l'étape (b).

33. Formule selon la revendication 29, où la teneur en monomère acrylate ou méthacrylate d'alkyle employé pour la greffe au substrat caoutchouc est comprise entre environ 70 % en masse et environ 2 % en masse, par rapport à la somme des masses de tous les monomères employés pour la greffe.

34. Formule selon la revendication 29, où le monomère d'acrylate ou de méthacrylate d'alkyle polymérisé en présence de la phase élastomère est le méthacrylate de méthyle.

35. Formule selon la revendication 29, où la résine thermoplastique supplémentaire est présente dans la formule à une teneur comprise entre environ 1 % en masse et environ 80 % en masse, par rapport à la masse de la formule tout entière.

36. Formule selon la revendication 28 ou 29, comprenant en outre au moins un additif sélectionné au sein du groupe constitué par les colorants, les teintes, les pigments, les lubrifiants, les stabilisants, les agents de démoulage, les charges et les mélanges de ces additifs.

37. Article comprenant la formule selon la revendication 1, la revendication 28 ou la revendication 29.
